# EUROPÄISCHE PATENTSCHRIFT

(11) **EP 2 792 086 B1**
(45) Veröffentlichungstag und Bekanntmachung des Hinweises auf die Patenterteilung: **02.12.2015**
(21) Anmeldenummer: 12815633.8
(22) Anmeldetag: 06.12.2012
(51) Int. Cl.: H04B 7/155

(54) **DRAHTLOSES KOMMUNIKATIONSNETZWERK**
WIRELESS COMMUNICATIONS NETWORK
RÉSEAU DE COMMUNICATION SANS FIL

(30) Priorität: 13.12.2011 DE 102011120827
(43) Veröffentlichungstag der Anmeldung: 22.10.2014
(73) Patentinhaber: Andrew Wireless Systems GmbH, 86675 Buchdorf (DE); Fraunhofer Gesellschaft zur Förderung der angewandten Forschung e.V., 80686 München (DE); Karlsruher Institut Für Technologie (KIT), 76131 Karlsruhe (DE)
(72) Erfinder: BRAZ, Oliver, 86653 Monheim (DE); DUSSMANN, Alfons, 86688 Gansheim (DE); TARLAZZI, Luigi, 48012 Bagnacavallo (IT); HAUSTEIN, Thomas, 14469 Potsdam (DE); WIRTH, Thomas, 12163 Berlin (DE); WIERUCH, Dennis, 10437 Berlin (DE); JONDRAL, Friedrich, 76228 Karlsruhe (DE); JÄKEL, Holger, 76227 Karlsruhe (DE)
(74) Vertreter: FDST Patentanwälte
(86) Internationale Anmeldenummer: PCT/EP2012/005029
(87) Internationale Veröffentlichungsnummer: WO 2013/087166

(56) Entgegenhaltungen:
- WO-A2-2010/120149
- US-A1- 2009 325 482
- US-A1- 2010 284 446
- US-A1- 2011 122 840
- US-B2- 7 200 404
- YULONG ZOU ET AL: "Spectrum efficiency of cognitive relay transmissions with cooperative diversity in cognitive radio networks", COMMUNICATION SYSTEMS, NETWORKS AND APPLICATIONS (ICCSNA), 2010 SECOND INTERNATIONAL CONFERENCE ON, IEEE, PISCATAWAY, NJ, USA, 29. Juni 2010 (2010-06-29), Seiten 59-62, XP031765544, ISBN: 978-1-4244-7475-2

## Beschreibung

Die Erfindung betrifft ein Kommunikationsnetzwerk für drahtlose Kommunikation, umfassend eine Basisstation, ein drahtloses Endgerät und wenigstens einen Repeater, der zwischen die Basisstation und das drahtlose Endgerät geschaltet ist. Dabei sind die Basisstation und das Endgerät eingerichtet, ein Kommunikationssignal auf multiplen Informationskanälen zu senden und zu empfangen. Der Repeater ist eingerichtet, Kommunikationssignale auf multiplen Informationskanä- len zu empfangen, durchzuleiten und erneut auszusenden. Das Kommunikationsnetzwerk umfasst weiter eine Umsetzeinrichtung zur Frequenzumsetzung wenigstens eines durchgeleiteten Informationskanals.

Das Kommunikationsnetzwerk kann insbesondere als ein Netzwerk innerhalb eines Mobilfunknetzes gegeben sein. Das Endgerät ist beispielsweise ein mobiles Endgerät, insbesondere ein mobiles Telefon.

Der Repeater kann beispielsweise als ein bidirektionaler Hochfrequenzverstärker ausgebildet sein, der die Kommunikationssignale innerhalb des Kommunikationsnetzwerkes verteilt, also empfängt, bei der Durchleitung verstärkt, filtert und erneut aussendet. Ein solcher Repeater wird insbesonders dazu eingesetzt, in Abschattungsbereichen eines Drahtlos-Netzes, wie sie beispielsweise an dem Übergang von einem Außen- in einen Innenraumbereich eines Gebäudes gegeben sind, die Kommunikation zwischen der Basisstation und dem Endgerät zu ermöglichen. Die Verstärkungsfunktion ist jedoch für das hier vorgestellte Kommunikationsnetzwerk nicht grundsätzlich erforderlich. Der Repeater kann zu einer bidirektionalen drahtlosen Aussendung und zu einem bidirektionalen drahtlosen Empfang der Kommunikationssignale ausgestaltet sein. Der Repeater kann aber auch zumindest in einer Kommunikationsrichtung die Kommunikationssignale drahtgebunden senden und/oder empfangen. Bezüglich der Kommunikationsrichtungen spricht man hierbei von einer Downlink-Richtung, wenn Kommunikationssignale in Richtung zum Endgerät übermittelt werden und von einer Uplink-Richtung, wenn Kommunikationssignale in Richtung zur Basisstation übermittelt werden.

Ein Kommunikationsnetzwerk der eingangs genannten Art ist beispielsweise aus der US 2010/0284446 A1 bekannt. Dort wird in einer "Multi-Hop"-Kette von Repeatern eine Frequenzumsetzung der Kommunikationssignale zwischen den Repeatern vorgenommen, um Interferenzen zwischen den Kommunikationssignalen eines Endgeräts und den zwischen den Repeatern ausgetauschten Kommunikationssignalen zu vermeiden. Das zur Kommunikation zwischen den Repeatern eingesetzte Frequenzspektrum ist außerhalb des zur Kommunikation zwischen Basisstation und Endgerät zugewiesenen Kommunikationsbandes angeordnet.

Auch aus der US 2009/0190508 A1 ist ein Kommunikationsnetzwerk der eingangs genannten Art bekannt. Dort wird eine Frequenzumsetzung in einem Repeater vorgenommen, um innerhalb eines für Primärnutzer zugewiesenen Kommunikationsbandes verfügbare, freie Frequenzen nutzen zu können, die durch den primären Nutzer aktuell nicht belegt sind.

Weiter ist in der WO 2010/120149 A2 ein Kommunikationsnetzwerk der eingangs genannten Art offenbart, das die aktuelle Benutzung von Frequenzspektren von Frequenzbändern, z.B. von TV-Bändern, Bändern über 2 GHz oder Mobilfunkbändern, ermittelt und den in einem Repeater empfangenen Übertragungsverkehr auch über benachbarte Repeater weiterleitet, die ungenutzte Frequenzbänder zur Verfügung haben.

In der US 2011/122840 A1 ist des Weiteren ein Kommunikationsnetzwerk der eingangs genannten Art beschrieben, wobei die aktuelle Benutzung von Frequenzspektren im Repeater gesammelt wird und der Repeater Frequenzwechsel auf freie Kanäle durchführt.

Ferner wird in der US 2009/325482 A1 ein vorstehend genanntes Kommunikationsnetzwerk vorgeschlagen, wobei in einer Übertragungsrichtung das Übertragungsspektrum zur Kommunikation zwischen Primärnutzern mittels einer Richtungsantenne hinsichtlich räumlich, zeitlich oder spektral ungenutzter Bereiche analysiert und entsprechend dieser Analyse eine Kommunikation zwischen Sekundärnutzern ermöglicht wird.

Schließlich wird in Yulong Zou et al.: "Spectrum efficiency of cognitive relay transmissions with cooperative diversity in cognitive radio networks", Communication Systems, Networks and Applications (ICCSNA), Piscataway, NJ, USA, 29. Juni 2010, Seiten 59-62, XP031765544, ISBN: 978-1-4244-7475-2, ein Kommunikationsnetzwerk der genannten Art beschrieben, wobei freie ungenutzte Frequenzbänder zur Übertragung von Kommunikationssignalen über Relais-Stationen genutzt werden.

Grundsätzlich führt die stetig wachsende Nachfrage nach mobilen Datendiensten zu einem wachsenden Bedarf an Übertragungskapazität. Aufgrund der begrenzten, für mobile Anwendungen zur Verfügung stehenden Bandbreite wurden in den letzten Jahren verstärkt Technologien entwickelt, welche eine Mehrfachnutzung dieser Ressource ermöglichen. So ist es gelungen, unter Verwendung von Mehrantennensystemen in Verbindung mit neuen Raum-Zeit-Kodierverfahren (MIMO, Multiple Input Multiple Output) die räumliche Diversität des Übertragungskanals nutzbar zu machen. Besonders effizient lassen sich diese Technologien in stark streuenden Umgebungen, wie sie beispielsweise im Inneren von Gebäuden oder in geschlossenen Fahrgastzellen anzutreffen sind, nutzen. Hier konnte nachgewiesen werden, dass sich die Übertragungskapazität annähernd linear mit der Anzahl der Antennen steigern lässt. Dabei ist es von Bedeutung, dass die räumlich verschiedenen Übertragungswege miteinander nicht bzw. so gering als möglich korreliert sind.

Bei der Versorgung größerer Funkzellen im Außenbereich können, insbesondere bei einer direkten Sichtverbindung zwischen den Kommunikationspartnern (LOS, Line Of Sight), nur mit zwei kreuzpolar angeordneten Antennen nennenswerte Steigerungen der Datenraten erzielt werden. Die mit anderen Konfigurationen (NLOS, Non Line Of Sight), insbesondere mit mehr als zwei Antennen, erreichten Ergebnisse rechtfertigen oft nicht die Kosten für die zusätzlich notwendig werdende Infrastruktur. Ein Hauptgrund dieser nicht zufriedenstellenden Ergebnisse liegt in der geringen Winkelspreizung und der daraus resultierenden starken Korrelation der Kommunikationssignale verschiedener Antennen im Außenbereich begründet.

Aufgabe der Erfindung ist es, ein Kommunikationsnetzwerk der eingangs genannten Art hinsichtlich seiner Übertragungskapazität unter Nutzung der vorhandenen Ressourcen zu verbessern.

Diese Aufgabe wird für ein Kommunikationsnetzwerk der eingangs genannten Art, wobei die Basisstation, das Endgerät und der Repeater zu einer Übertragung eines Kommunikationssignal auf wenigstens zwei gleichfrequenten MIMO kodierten Informationskanälen eingerichtet sind, erfindungsgemäß dadurch gelöst, dass zusätzlich eine Messempfangseinheit umfasst ist, die zur Ermittlung ungenutzter, außerhalb der dem Mobilfunk zugewiesenen Frequenzbänder liegender Frequenzbereiche zur drahtlosen Kommunikation eingerichtet ist, dass die Messempfangseinheit mit der Umsetzeinrichtung des Repeaters verbunden ist, dass die Umsetzeinrichtung eingerichtet ist, die Frequenzumsetzung in wenigstens einer Kommunikationsrichtung auf eine Frequenz aus den ungenutzten, außerhalb der dem Mobilfunk zugewiesenen Frequenzbänder liegenden Frequenzbereichen vorzunehmen, so dass die MIMO-kodierten Informationskanäle dann multifrequent übertragen werden, und dass der Repeater eingerichtet ist, das Kommunikationssignal mit dem wenigstens einen frequenzumgesetzten Informationskanal in der wenigstens einen Kommunikationsrichtung drahtlos zu senden, wobei der wenigstens eine frequenzumgesetzte MIMO-kodierte Informationskanal auf einer anderen Frequenz außerhalb der dem Mobilfunk zugewiesenen Frequenzbänder transportiert wird.

Die Erfindung geht dabei in einem ersten Schritt von dem beispielsweise in M. Mück et al., "ETSI reconfigurable radio systems: status and future directions on software defined radio and cognitive radio standards, IEEE Communications Magazine, Sept. 2010, S. 78-86, diskutierten Ansatz eines sogenannten kognitiven Funksystems aus, mit dem freie ungenutzte Frequenzbereiche in dem insbesondere für mobile Anwendungen im Außenbereich sinnvoll nutzbaren Frequenzspektrum erschlossen werden sollen. Ein wesentlicher Gedanke besteht hierbei darin, beispielsweise mit Hilfe verteilter Sensoren die tatsächliche Nutzung der verfügbaren Funkressourcen zu ermitteln und zentral über deren effiziente Nutzung zu entscheiden. Dazu tauschen die einzelnen Geräte Informationen darüber aus, mit welchen Frequenzen die Informationskanäle jeweils übertragen werden, wobei die Wahl der jeweiligen Frequenz zeitlich oder örtlich von den verfügbaren Funkressourcen abhängig ist, also "kognitiv" vorgenommen wird. Methoden, die örtliche Nutzung des verfügbaren Frequenzspektrums messtechnisch zu ermitteln, sind beispielsweise in der US 6, 882, 851 B2 oder der US 7, 146, 176 B2 vorgestellt. Der Einsatz einer diesbezüglich zentralen Datenbank wird in der US 7, 200, 404 B2 vorgeschlagen.

In einem zweiten Schritt geht die Erfindung von der Überlegung aus, dass bezüglich des für mobile Anwendungen im Außenbereich sinnvoll nutzbaren Frequenzbereiches zwischen 400 MHz (darunter werden die benötigten Antennenstrukturen zu groß) bis 3.000 MHz (darüber wird die Ausbreitungsdämpfung zu groß) nur ein geringer Teil tatsächlich für den Mobilfunk zur Verfügung steht. Die übrigen Bereiche werden entweder nur regional, z. B. terrestrisches Fernsehen, nur lokal, z. B. Inhaus WLAN, oder zeitlich begrenzt, z. B. Radar, und damit sehr ineffizient genutzt.

In einem dritten Schritt geht die Erfindung schließlich von der weiteren Überlegung aus, die prinzipiell für eine drahtlose Kommunikation nutzbaren Funkfrequenzbereiche für den Austausch der Kommunikationssignale innerhalb eines drahtlosen Kommunikationsnetzwerkes heranzuziehen, um dessen Übertragungskapazität zu verbessern. Mit anderen Worten werden multiple Informationskanäle unter Nutzung freier Funkfrequenzen, sogenannter "white spaces", kognitiv auf verschiedene Frequenzen verteilt übertragen, so dass die Übertragungskapazität intelligent erhöht werden kann. Insbesondere ermöglicht es diese Vorgehensweise, Frequenzen außerhalb der für Mobilfunk zugewiesenen Frequenzbänder zu benutzen, so dass zusätzliche Ressourcen eingebunden werden können. Insbesondere ist es nicht notwendig, Frequenzen innerhalb der für Mobilfunk zugewiesenen Frequenzbänder zu nutzen. Auf diese Weise kann die Kapazitätsgrenze eines Kommunikationsnetzwerkes überwunden werden, die durch eine nur noch begrenzte Ausnutzungsmöglichkeit der "voll" belegten Kommunikationsbänder der mobilen Kommunikation gegebenen ist.

Mit anderen Worten ermöglicht es die Erfindung, insbesondere für Kommunikationssignale, die bereits auf multiplen Informationskanälen übertragen werden, Ressourcen außerhalb des für die drahtlose Kommunikation jeweils zugewiesenen Frequenzbandes zu nutzen. Wird zur Erhöhung der Übertragungskapazität in einem Außenbereich die MIMO Technologie genutzt, also das Kommunikationssignal mittels räumlich multipler Informationskanäle und mehrerer Antennen übertragen, so kann der für das hier angegebene Kommunikationsnetzwerk eingesetzte Repeater eingerichtet sein, die gleichfrequenten MIMO-Signale unter Nutzung freier Frequenzen kognitiv auf verschiedene Frequenzen umzusetzen und drahtlos zu übertragen. Dabei bleibt die für MIMO-Signale verwendete Signalkodierung erhalten, so dass nach einer entsprechenden Frequenzrückumsetzung die Signale über mehrere Antennen gleichfrequent erneut als MIMO-Signale ausgesendet werden können. Dadurch, dass die MIMO-Signale jedoch über die Luftschnittstelle frequenzumgesetzt unter Nutzung freier Frequenzen übermittelt werden, entfällt im Außenbereich die unerwünschte Beschränkung der Übertragungskapazität durch Korrelation der parallel ausgesendeten MIMO-Signale.

Die Erfindung eignet sich auch dafür, MIMO-Signale im Außenbereich unter Nutzung freier Frequenzbänder frequenzumgesetzt drahtlos zu übermitteln und in einem Innenraumbereich, in dem die Vorteile der MIMO-Technologie voll ausgeschöpft werden können, nach Frequenzrückumsetzung über verschiedene Antennen wieder als MIMO-Signale auszusenden.

Mit weiteren Vorteilen ist der Einsatz der Erfindung für die Einspeisung von MIMO-Signalen in eine mobile Schirmzelle, wie beispielsweise in den Innenraum eines fahrenden Zuges, verbunden. Bei einer solchen Technologie ist eine weitere Verschlechterung des Datendurchsatzes (neben der unerwünschten Beschränkung durch Korrelation der MIMO-Signale im Außenbereich) zu erwarten. Denn es hat sich gezeigt, dass der mit zunehmender Geschwindigkeit der mobilen Schirmzelle steigende Frequenzversatz durch Dopplerverschiebung zusätzlich die gewünschte Dekorrelation der gleichfrequenten MIMO-Signale erschwert. Heute bekannte Verfahren zur Korrektur dieses Effekts erlauben lediglich eine Schrittgeschwindigkeit des mobilen Systems.

Wird demnach ein MIMO-fähiger Repeater zur Einkopplung in die Schirmzelle eingesetzt, der in Downlink-Richtung kognitiv umgesetzte MIMO-Signale auf verschiedenen Frequenzen empfängt, diese oder wenigstens eines dieser MIMO-Signale erneut frequenzumsetzt, und als gleichfrequente MIMO-Signale in den Innenraum abstrahlt, sind die mit dem Dopplereffekt verbundenen Nachteile bei Nutzung der MIMO-Technologie überwunden.

Unter dem vorliegend verwendeten Begriff einer Umsetzeinrichtung sind diejenigen Komponenten einer entsprechenden Baugruppe zusammengefasst, die zu einer Frequenzumsetzung eines durchlaufenden Kommunikationssignals notwendig sind. Insbesondere ist davon auch ein Frequenzmischer umfasst, der gelegentlich separat zu einer Umsetzeinrichtung beschrieben ist.

In einer bevorzugten Ausgestaltung umfasst die Basisstation eine weitere Umsetzeinrichtung zur Frequenzumsetzung, die mit der Messempfangseinheit verbunden und eingerichtet ist, die Frequenzumsetzung in Downlink-Richtung auf eine Frequenz aus den ungenutzten, außerhalb der dem Mobilfunk zugewiesenen Frequenzbänder liegenden Frequenzbereichen vorzunehmen, wobei die Umsetzeinrichtung des wenigstens einen Repeaters eingerichtet ist, in Downlink-Richtung die Frequenz des frequenzumgesetzten Informationskanals zurückzusetzen, und in Uplink-Richtung die Frequenzumsetzung des wenigstens einen Informationskanals in die Frequenz aus den ungenutzten, außerhalb der dem Mobilfunk zugewiesenen Frequenzbänder liegenden Frequenzbereichen vorzunehmen.

Im vorgenannten Fall ist beispielsweise die Basisstation als eine kognitive Basisstation ausgebildet, die Kommunikationssignale zur Erhöhung der Übertragungskapazität bereits auf verschiedenen der genannten freien Frequenzen austauscht.

Um diese kognitiv räumlich, zeitlich oder örtlich veränderlich umgesetzten Frequenzen der verschiedenen Informationskanäle verarbeiten zu können, ist grundsätzlich ein kognitives Endgerät notwendig, welches über eine eigene Messempfangseinheit mit der Basisstation hinsichtlich der eingesetzten Frequenzen "synchronisiert" arbeitet. Die Einführung solcher Endgeräte und derartiger Basisstationen ist jedoch mit einem hohen Kostenaufwand und der Etablierung einer zusätzlichen Infrastruktur verbunden.

Ist der Repeater jedoch im Sinne der vorliegenden Erfindung eingerichtet, mittels der implementierten Umsetzeinrichtung in Downlink-Richtung die Frequenz des frequenzumgesetzten Informationskanals erneut umzusetzen und in Uplink-Richtung die Frequenzumsetzung des wenigstens einen Informationskanals in die Frequenz aus den ungenutzten Frequenzbereichen vorzunehmen, so ist kein kognitives Endgerät zum Informationsaustausch notwendig. Vielmehr übernimmt in diesem Fall der Repeater die Transformation eines kognitiven Kommunikationsnetzwerkes für das Endgerät. Das Endgerät ist dann ein MIMO- oder Mehrfrequenz-Endgerät, welches über zwei oder mehr Antennen verfügt bzw. auf zwei oder mehr Mobilfunkbändern arbeitet, was dem derzeitigen Stand der Technik entspricht.

Bei der vorgenannten Ausführungsvariante wird die kognitive Basisstation insbesondere ertüchtigt, beispielsweise auf Anfrage des Repeaters, die auf multifrequenten Informationskanälen ausgesendeten Kommunikationssignale entsprechend dem MIMO-Verfahren zu kodieren. In diesem Fall erhält der Repeater mit hoher Übertragungskapazität auf multifrequenten Informationskanälen ein MIMOkodiertes Kommunikationssignal. Dieses MIMO-kodierte Kommunikationssignal wird dann für ein MIMO-fähiges Endgerät hinsichtlich der Frequenzen rückumgesetzt und als MIMO-Signal mit wenigstens zwei örtlich multiplen gleichfrequenten Informationskanälen auf wenigstens zwei oder mehr Antennen ausgestrahlt. In diesem Fall nutzt die Erfindung beispielsweise im Außenbereich eine mulifrequente kognitive Datenübermittlung, um für das Endgerät, insbesondere in einem Innenraumbereich, die MIMO-Technologie mit hoher Übertragungskapazität zu nutzen.

In einer weiteren Ausführungsvariante sind zwischen Basisstation und Endgerät wenigstens zwei Repeater umfasst, die eingerichtet sind, Kommunikationssignale auf multiplen Informationskanälen zu empfangen, durchzuleiten und erneut auszugeben, und die jeweils eine mit der Messempfangseinheit verbundene Umsetzeinrichtung zur Frequenzumsetzung wenigstens eines durchgeleiteten Informationskanals in wenigstens einer Kommunikationsrichtung auf eine Frequenz aus den ungenutzten, außerhalb der dem Mobilfunk zugewiesenen Frequenzbänder liegenden Frequenzbereichen enthalten, wobei die Umsetzeinrichtung des basisstationsseitigen Repeaters eingerichtet ist, in Downlink-Richtung die Frequenzumsetzung des wenigstens einen Informationskanals auf die Frequenz aus den ungenutzten, außerhalb der dem Mobilfunk zugewiesenen Frequenzbänder liegenden Frequenzbereichen vorzunehmen und in Uplink-Richtung die Frequenz des Frequenz umgesetzten Informationskanals erneut umzusetzen, insbesondere zurück zu setzen und wobei die Umsetzeinrichtung des endgerätseitigen Repeaters eingerichtet ist, in Downlink-Richtung die Frequenz des Frequenz umgesetzten Informationskanals zurückzusetzen, und in Uplink-Richtung die Frequenzumsetzung des wenigstens einen Informationskanals auf die Frequenz aus den ungenutzten, außerhalb der dem Mobilfunk zugewiesenen Frequenzbänder liegenden Frequenzbereichen vorzunehmen.

Mit anderen Worten sind in dieser vorteilhaften Ausführungsvariante zwei Repeater vorgesehen, die drahtlos über eine jeweilige Luftschnittstelle miteinander kommunizieren. Für diese drahtlose Kommunikation wird die kognitive Informationsübermittlung genutzt. Der basisstationsseitige Repeater empfängt die multiplen Informationskanäle der Basisstation, setzt diese Informationskanäle kognitiv auf die freien Frequenzen um und sendet diese drahtlos aus. Der endgerätseitige Repeater empfängt die kognitiv umgesetzten mehrfrequenten Informationskanäle drahtlos, setzt die Frequenzen der Informationskanäle entsprechend zurück, und sendet die Signale beispielsweise als multiple Informationskanäle auf dem zugewiesenen Kommunikationsband der Basisstation aus. Für die Uplink-Richtung, d.h. einer Kommunikation des Endgerätes in Richtung zur Basisstation, tauschen die Repeater ihre Funktionalität. Hier wie auch in den voran beschriebenen Ausführungsvarianten ist es für die Erfindungen nicht notwendig, dass der Repeater bzw. die Umsetzeinrichtung die kognitiv umgesetzten Frequenzen in die ursprünglichen Frequenzen zurückversetzt. Es ist auch möglich, die kognitiv frequenzversetzten Informationskanäle in andere Frequenzen als die des Kommunikationsbandes der Basisstation umzusetzen.

Wie erwähnt, ist die Basisstation eine MIMO-fähige Basisstation und eingerichtet, ein Kommunikationssignal auf räumlich multiplen Informationskanälen zu senden und zu empfangen, wobei der basisstationsseitige Repeater als MIMO-fähiger Repeater eingerichtet ist und somit in der Lage ist, in Uplink-Richtung räumlich multiple Informationskanäle zu senden und in Downlink-Richtung räumlich multiple Informationskanäle zu empfangen. Mit anderen Worten kommuniziert der basisstationsseitige Repeater mit der Basisstation in der MIMO-Technologie. Auf der Endgerätseite kommuniziert der Repeater auf den in der Frequenz kognitiv versetzten Informationskanälen. Ein zweiter Repeater kommuniziert mit dem ersten Repeater auf den in der Frequenz kognitiv versetzten Informationskanälen. Auf der Endgerätseite kommuniziert dieser zweite Repeater mit dem Endgerät nach MIMO-Technologie.

Zweckmäßigerweise ist in der vorgenannten Ausführungsvariante der basisstationsseitige Repeater über bidirektionale Koppler an die Basisstation, insbesondere an die Antennenzuleitungen, angeschlossen, wobei die Kommunikationssignale mit der Basisstation optisch oder elektrisch ausgetauscht werden. In diesem Fall werden die für MIMO kodierten Kommunikationssignale mit der Basisstation drahtgebunden ausgetauscht.

Weiter ist das Endgerät ein MIMO-fähiges Endgerät, welches eingerichtet ist, ein Kommunikationssignal auf räumlich multiplen Informationskanälen zu senden und zu empfangen, wobei der wenigstens eine oder endgerätseitige Repeater ein MIMO-fähiger Repeater ist, der eingerichtet ist, in Downlink-Richtung räumlich multiple Informationskanäle zu senden und in Uplink-Richtung räumlich multiple Informationskanäle zu empfangen.

Weiter bevorzugt ist der oder jeder Umsetzeinrichtung eine Messempfangseinheit zugeordnet, wobei die Messempfangseinheiten hinsichtlich der für die Frequenzumsetzung zu wählenden Frequenz miteinander verbunden und "synchronisiert" sind. Auf diese Weise entsteht ein kognitives Kommunikationsnetzwerk, wobei die jeweiligen Umsetzeinrichtungen und Repeater über die Messempfangseinheiten die jeweiligen gewählten Frequenzen aus dem freien Frequenzbereichen miteinander austauschen, so dass jeweils die notwendige Information zur Frequenzumsetzung bzw. Zurücksetzung der Frequenz vorliegt.

In einer anderen bevorzugten Ausgestaltung ist vom Kommunikationsnetzwerk ein Multiband-Übertragungssystem mit einer Master-Einheit und wenigstens einer mit der Master-Einheit über eine gemeinsame Signalleitung verbundene Remote-Einheit umfasst, wobei die Master-Einheit zum Senden und zum Empfangen der Kommunikationssignale auf multiplen Informationskanälen und zur Aufschaltung oder Auskopplung der multiplen Informationskanäle auf ein oder aus einem Übertragungssignal ausgebildet ist, wobei das Übertragungssignal über die gemeinsame Signalleitung geführt ist, und wobei der wenigstens eine oder endgerätseitige Repeater als Bestandteil der Remote-Einheit ausgebildet ist. Ein derartiges Multiband-Übertragungssystem kann z.B. der DE 10 2009 052 936 A1 entnommen werden.

In dieser Ausgestaltungsvariante werden Kommunikationssignale mit der Basisstation beispielsweise über eine Luftschnittstelle der Master-Einheit ausgetauscht. Die multiplen Informationskanäle werden mit anderen Informationskanälen wie z.B. aus einem digitalen Netzwerk oder dergleichen, gegebenenfalls zur Vermeidung von Interferenzen einzeln frequenzumgesetzt und über eine gemeinsame Signalleitung zwischen der Master-Einheit und den Remote-Einheiten ausgetauscht. Die gemeinsame Signalleitung ist hierbei beispielsweise elektrisch oder optisch ausgeführt, so dass Verluste durch Funkübertragung vermieden werden. An den Remote-Einheiten werden die verschiedenen multiplen Informationskanäle in ihrer Frequenz zurückversetzt und drahtlos übermittelt. Das Multiband-Übertragungssystem überträgt in einer Ausführungsvariante insbesondere die in der Frequenz kognitiv umgesetzten Informationskanäle, wobei die Transformation der kognitiven frequenzversetzten Informationskanäle in der Remote-Einheit stattfindet. Die Synchronisation hinsichtlich der kognitiven Frequenzumsetzung kann insbesondere über die in der Remote-Einheit integrierte Umsetzeinrichtung erfolgen, die ebenfalls über die gemeinsame Signalleitung an ein digitales Netzwerk angeschlossen sein kann.

Für die Funktion eines kognitiven Netzwerkes ist eine möglichst einfache Koordination mit anderen Funkdiensten, die insbesondere für primäre Nutzer freigegeben sind, anzustreben. Um Störungen im Frequenzbereich dieser primären Nutzer auszuschliessen, ist in einer bevorzugten Ausgestaltung alternativ oder zusätzlich zu einer messtechnischen Überprüfung der Verfügbarkeit ("listen before talk") potenziell freier, also ungenutzter, Frequenzbänder eine zentrale Kontrolleinrichtung eingesetzt. Zweckmäßigerweise findet im Netzwerk insbesondere eine Koordination des kognitiven Zusammenwirkens eines oder mehrerer Repeater mit einer oder mehrerer Basisstationen statt.

Zu diesem Zweck ist in einer vorteilhaften Ausgestaltung des Kommunikationsnetzwerkes die oder jede Messempfangseinheit des angegebenen Kommunikationsnetzwerkes mit einer zentralen Datenbank verbunden, in welcher die zur drahtlosen Kommunikation ungenutzten, außerhalb der dem Mobilfunk zugewiesenen Frequenzbänder liegenden Frequenzbereiche hinterlegt sind. Vorteilhaft sind dazu die Messempfangseinheiten jeweils mit einem Modem ausgestattet, die drahtlos oder kabelgebunden untereinander und/oder mit dieser zentralen kognitiven Datenbank verbunden sind. Ein drahtloses Modem ist beispielsweise ein GSM-, UMTS- oder LTE-Modem. Ein kabelgebundenes Modem kann beispielsweise ein ISDN-, DSL- oder LAN-Modem sein. Aus dieser Datenbank können die Messempfangseinheiten die lokal oder temporär freien ungenutzten Frequenzbereiche abrufen und insofern mittels der jeweiligen Umsetzeinrichtungen die jeweilige kognitive Frequenzumsetzung der Informationskanäle vornehmen. Umgekehrt können die jeweiligen Messempfangseinheiten des Kommunikationsnetzwerkes die gewählten Frequenzen für die anderen Messempfangseinheiten auch in der zentralen Datenbank ablegen, wo diese abrufbar zur Verfügung gestellt werden.

In einer hierzu weiter zweckmäßigen Ausgestaltung ist die oder jede Messempfangseinheit mit einem Spektrumsanalysator ausgestattet. Dieser kann beispielsweise die lokal oder temporär freien ungenutzten Frequenzbereiche erfassen und die erhaltene Information in die zentrale Datenbank ablegen. Die einzelnen Messempfangseinheiten des Kommunikationsnetzwerkes stellen damit gewissermaßen Sensoren eines kognitiven Drahtlos-Netzwerkes dar.

Speziell bei dem Einsatz des Kommunikationsnetzwerkes zur Übertragung in eine mobile Schirmzelle kommt der messtechnisch unterstützten Koordination der Spektrumsnutzung eine besondere Bedeutung zu, da hier unter Umständen Versorgungsgebiete verschiedener primärer Nutzerdienste passiert werden. Werden vom Spektrumsanalysator zusätzlich GPS-Daten verwendet bzw. mit aufgezeichnet, kann somit weiter vorteilhaft auch die Datenbank mit räumlich aufgelösten Informationen über die Spektrumssnutzung gespeist werden.

Die oder jede Umsetzeinrichtung ist vorteilhafterweise eingerichtet, für wenigstens einen der Informationskanäle keine Frequenzumsetzung vorzunehmen. Auf diese Weise kann Rechenkapazität und apparativer Aufwand eingespart werden.

Um eine Rückkopplung des ausgesendeten Kommunikationssignals mit dem durcheilenden Kommunikationssignal zu vermeiden, ist der oder jeder Repeater optional mit elektronischen Mitteln zur Unterdrückung der Rückkopplung ausgestattet. Zweckmäßigerweise umfassen die Mittel zur Unterdrückung einer Rückkopplung einen digitalen adaptiven Filter. Dazu wird ein Teil des ausgesendeten Kommunikationssignals auf den adaptiven Filter rückgekoppelt und damit seine Übertragungsfunktion geändert. Auf digitaler Ebene werden dadurch Rückkopplungsanteile im durcheilenden Kommunikationssignal unterdrückt.

Ausführungsbeispiele der Erfindung werden anhand einer Zeichnung näher erläutert. Dabei zeigen:
- Fig 1:: schematisch ein Kommunikationsnetzwerk mit einer MIMO-fähigen Basisstation, einem MIMO-fähigen Endgerät und zwei Repeatern, die miteinander drahtlos auf in der Frequenz kognitiv versetzten Informationskanälen kommunizieren,
- Fig. 2:: schematisch ein Kommunikationsnetzwerk mit einer kognitiven Basisstation, einem MIMO-fähigen Endgerät und einem Repeater, der zwischen in der Frequenz kognitiv versetzten Informationskanälen des Kommunikationssignals und MIMO-fähigen Informationskanälen transformiert,
- Fig. 3:: schematisch ein Kommunikationsnetzwerk mit einem Multiband-Übertragungssystem zu einer Inhaus-Versorgung,
- Fig. 4:: schematisch die Versorgungslage im Inhaus-Bereich mit dem Kommunikationsnetzwerk entsprechend Fig. 3,
- Fig. 5:: messtechnisch mit verschiedenen Antennenanordnungen ermittelte Verteilungsfunktionskurven des Datendurchsatzes und
- Fig. 6:: die auf ein 4x4 MIMO-System extrapolierten kumulativen Verteilungsfunktionskurven des Datendurchsatzes.

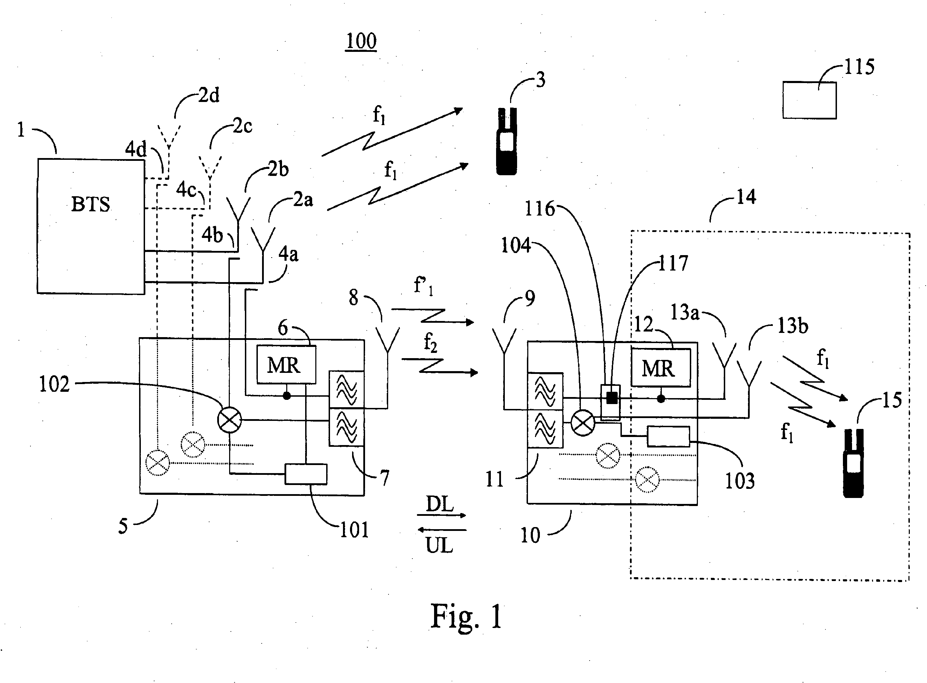

In Fig. 1 ist schematisch ein Kommunikationsnetzwerk 100 mit einer MIMO-fähigen Basisstation 1, einem MIMO-fähigen Endgerät 3, einem MIMO-fähigen Endgerät 15 und zwei Repeatern 5, 10 dargestellt. Dabei ist der Übersichtlichkeit halber der Übertragungspfad der Kommunikationssignale in Downlink-Richtung DL dargestellt. Auf die Übertragung der Kommunikationssignale in Uplink-Richtung UL können die gezeigten Ausführungen entsprechend übertragen werden. Die Nutzung von MIMO-Übertragungstechniken in Uplink-Richtung UL ist gegenwärtig nicht Bestandteil von MIMO-fähigen mobilen Kommunikationsnetzwerken. Die Nutzung von MIMO-Übertragungstechniken in Uplink-Richtung UL wird jedoch fester Bestandteil zukünftiger Revisionen sein.

Zur Nutzung der MIMO-Übertragungstechnik verfügen die Basisstation 1 sowie die Endgeräte 3, 15 jeweils für die Kommunikation innerhalb eines für ein Mobilnetz zugewiesenen Frequenzbandes über mindestens zwei Antennen. Für die Basisstation 1 sind die entsprechenden beiden Antennen 2a und 2b gekennzeichnet. Die weiteren beiden Antennen 2c und 2d sind zur Nutzung der 4x4 oder 4x2 MIMO-Technologie, welche ebenfalls Gegenstand zukünftiger Revisionen sein wird, vorgesehen.

Über die mehreren, vorliegend zwei Antennen 2a, 2b der Basisstation 1 bzw. der Endgeräte 3, 15 werden entsprechend der MIMO-Technologie Kommunikationssignale auf gleichfrequenten räumlich multiplen (vorliegend zwei) Informationskanälen übermittelt. Mehrere Antennen erhöhen dabei die Übertragungskapazität. Die Anwendung der MIMO-Technologie ist ein wesentlicher Bestandteil in Mobilfunksystemen der vierten Generation (4G). Zu diesen Systemen zählen beispielsweise das spreizcodebasierte HSPA+ (High Speed Packet Access)-Verfahren, CDMA(Code Division Multiple Access), und die auf orthogonalem Frequenz Multiplexing beruhenden (OFDM: Orthogonal Frequency Division Multiplexing) WLAN-, WiMAX- und LTE-Vertahren (Long Term Evolution).

Entsprechend Fig. 1 strahlt die MIMO-fähige Basisstation über die wenigstens zwei Antennen 2a, 2b Kommunikationssignale auf räumlich multiplen gleichfrequenten Informationskanälen ab. Die Frequenz ist hierbei in Fig. 1 mit f₁ bezeichnet. Sich im Versorgungsbereich der Basisstation 1 befindliche MIMO-fähige Endgeräte 3 können so eine direkte Funkverbindung herstellen. Parallel zu dieser optionalen unmittelbaren Verbindung zwischen der MIMO-fähigen Basisstation 1 und dem MIMO-fähigen Endgerät 3 wird ein Teil der MIMO-Signale auf den Antennenzuleitungen der Basisstation 1 mittels bidirektionaler Koppler 4a, 4b entnommen und an einen Repeater 5 weitergeleitet. Abweichend zu der hier dargestellten kabelgeführten Anbindung ist für den Repeater 5 auch eine Abbindung über Richtantennen denkbar.

Der Repeater 5 umfasst eine Messempfangseinheit 6, die mit einer Umsetzeinrichtung 101 verbunden ist. Die Umsetzeinrichtung 101 umfasst weiter einen zugeordneten Frequenzmischer 102 und ist in der Lage, die dem Repeater 5 durcheilenden Kommunikationssignale in ihrer Frequenz umzusetzen.

Die Messempfangseinheit 6 umfasst einen Spektrumsanalysator, der in der Lage ist, die örtlich und zeitlich freien, für Mobilfunk nutzbaren Frequenzbereiche zu analysieren. Ergänzend dazu oder alternativ ist die Messempfangseinheit 6 als ein drahtloses oder kabelgebundenes Modem ausgestaltet und steht mit einer zentralen Datenbank 115 in Verbindung, die lokal oder temporär für eine Mobilfunkkommunikation zur Verfügung stehende freie Frequenzbereiche zur Verfügung stellt. Basierend auf den Spektrumsinformationen der Messempfangseinheit 1 wird mittels der Umsetzeinrichtung 101 und des Frequenzmischers 102 einer der beiden MIMO-Informationskanäle frequenzversetzt. Der Frequenzversatz erfolgt dabei in einen Spektrumsbereich hinein, der außerhalb des Mobilfunkbandes der Basisstation 1 liegt. Insbesondere kann dieser Frequenzbereich im für terrestrisches Fernsehen vorgesehenen Frequenzband liegen. In der in Fig. 1 dargestellten Ausgestaltung bleibt ein Informationskanal in der ursprünglichen Frequenzlage.

Der in der Frequenz verbleibende Informationskanal wird mit dem mittels der Messempfangseinheit 6 kognitiv in seiner Frequenz verschobenen weiteren Informationskanal nach Durchlaufen eines Combiners oder Multiplexers 7 gemeinsam über eine Antenne 8 über die Luftschnittstelle des Repeaters 5 abgestrahlt. Die kognitiv umgesetzten MIMO-Signale sind nun mit den Frequenzen f₁' und f₂ bezeichnet. In einer anderen Ausgestaltung kann die Abstrahlung auch über den Frequenzen jeweils separat zugeordneten Antennen erfolgen.

Nach der drahtlosen Übertragung der frequenzumgesetzten ursprünglichen MIMO-Signale werden diese mittels der Antenne 9 eines zweiten Repeaters 10 empfangen. Die beiden Frequenzen werden in einem Multiplexer 11 separiert. Auch für den Repeater 10 ist alternativ der Empfang beider in der Frequenz verschiedenen Informationskanäle über separat zugeordnete Antennen möglich.

Auch der Repeater 10 umfasst eine Messempfangseinheit 12, die mit einer Umsetzeinrichtung 103 mit Frequenzmischer 104 verbunden ist. Basierend auf den Spektrumsinformationen und Informationen welche über das zugeordnete Modem der Messempfangseinheit 12 bereitgestellt werden, wird der in der Frequenz kognitiv versetzte Informationskanal auf eine geeignete Frequenz zurück verschoben. Dabei muss es sich bei dieser Frequenz nicht unbedingt um die ursprüngliche an der Basisstation 1 ausgesendete Frequenz handeln. Sowohl der Repeater 5 als auch der Repeater 10 erhalten zur "Synchronisation" der kognitiv umgesetzten Frequenzen von den jeweiligen Messempfangseinheiten 6, 12 die entsprechenden Informationen.

Der Repeater 10 umfasst optional weiter als Mittel zur Unterdrückung einer Rückkopplung 116 einen adaptiven Filter 117, der im durchgeleiteten Signal Rückkopplungseffekte aus den abgestrahlten Signalen unterdrückt.

Die nun bevorzugt sich spektral überlappenden beiden Informationskanäle werden über Inhaus-Antennen 13a, 13b in einen stark streuenden Innenraumbereich 14 eines Gebäudes oder einer Fahrgastzelle abgestrahlt. Ein sich im Innenraumbereich 14 befindliches MIMO-Endgerät 15 kann nun diese Kommunikationssignale empfangen.

Im Innenraumbereich 14 kann die MIMO-Technologie hinsichtlich ihrer Möglichkeiten zur Erhöhung des Datendurchsatzes voll ausgeschöpft werden. Die über mehrere Antennen 13a, 13b ausgesendeten MIMO-Signale sind aufgrund der starken Streuung mit hoher Wahrscheinlichkeit nur schwach korreliert.

Ein besonderes Merkmal des in Fig. 1 dargestellten Kommunikationsnetzwerkes 100 ist die Tatsache, dass das Endgerät 15 keine Kenntnis über den kognitiven Frequenzversatz zur Kommunikation zwischen den beiden Repeatern 5, 10 besitzen muss.

Die mittels der Messempfangseinheiten 6, 12 ermittelten Informationen über die lokale und temporäre Nutzung des für mobile Kommunikation zur Verfügung stehenden Frequenzbereiches wird insbesondere über die zuvor beschriebene Modemverbindung der zentralen Datenbank 115 zur Verfügung gestellt. Hierdurch wird die Koordination mit anderen Funkdiensten verbessert. Über die Messempfangseinheiten 6, 12 und die damit verbundenen Umsetzeinrichtungen 101, 103 können somit schwach besetzte Frequenzbänder gezielt zur Erhöhung der Übertragungskapazität genutzt werden. Insbesondere können Übertragungskapazitäten in einzelnen Frequenzbereichen gebündelt, andere entlastet oder gänzlich abgeschaltet werden. Durch eine Aktivierung oder Deaktivierung ganzer Übertragungszweige kann der Energieverbrauch des Kommunikationsnetzwerkes insgesamt bedarfsgerecht optimiert werden.

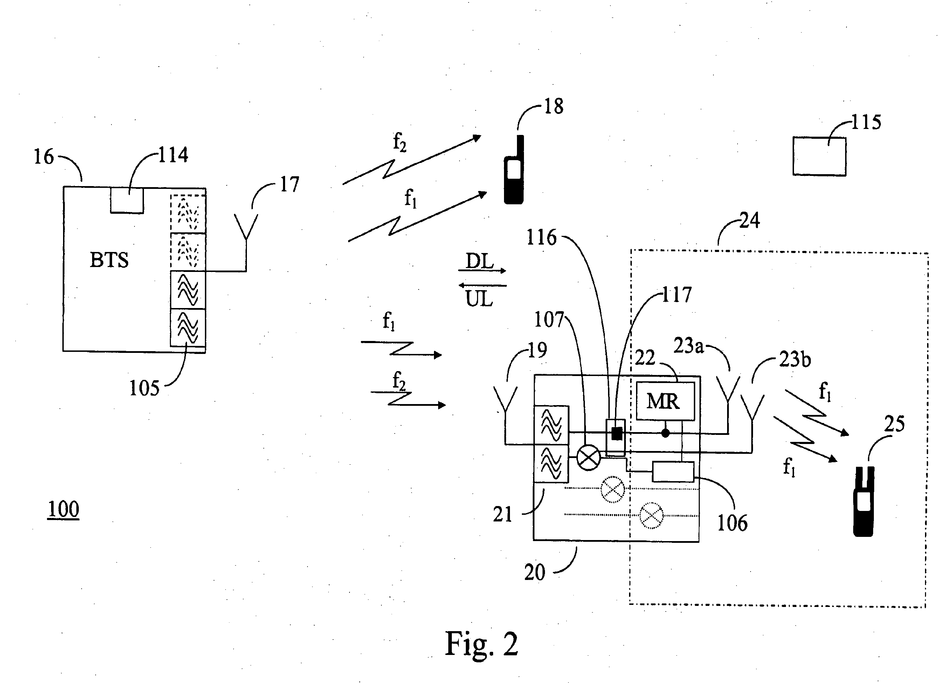

Anstelle eines unmittelbar an eine Basisstation 1 angekoppelten Repeaters 5 gemäß Fig. 1 ist es alternativ auch möglich, die Basisstation 1 selbst kognitiv auszugestalten. Diese Ausführungsvariante ist in Fig. 2 dargestellt.

Das Kommunikationsnetzwerk 100 gemäß Fig. 2 umfasst eine kognitive Basisstation 16, die über eine weitere Umsetzeinrichtung 114 zur kognitiven Frequenzumsetzung der Kommunikationssignale verfügt. Die in der Frequenz kognitiv umgesetzten multiplen Informationskanäle werden über eine gemeinsame Antenne 17 ausgestrahlt. Sinngemäß sind hierfür zwei Frequenzen f₁ und f₂ eingezeichnet. Die multifrequenten Informationskanäle sind hierbei in der Basisstation 16 über einen Combiner oder Multiplexer 105 geführt.

Neben dem direkten Empfang der in der Frequenz kognitiv versetzten Informationskanäle mittels eines kognitiven Endgerätes 18 können diese Informationskanäle auch mit den Antennen 19 eines Repeaters 20 empfangen werden. Der Repeater 20 gemäß Fig. 2 ist entsprechend dem Repeater in Fig. 1 ausgestattet. Anstelle mit einer gemeinsamen Antenne 19 können die multifrequenten Informationskanäle auch über separate Antennen empfangen werden.

Um über den Repeater 20 im Innenraumbereich 24 eines Gebäudes oder einer Fahrgastzelle die MIMO-Technologie nutzen zu können, erhält die Basisstation 16 die Information, die in der Frequenz kognitiv versetzten multiplen Informationskanäle mit einer entsprechenden MIMO-Kodierung zu versehen. Die so kodierten Signale werden über die Informationskanäle am Repeater 20 empfangen.

Mittels der Umsetzeinrichtung 106 und dem zugeordneten Frequenzmischer 107 wird einer der Informationskanäle in seiner Frequenz zurückversetzt, wobei die diesbezügliche Information hinsichtlich der kognitiv gewählten Frequenz von der Messempfangseinheit 22 bzw. dessen zugeordneten Modem zur Verfügung gestellt ist. Über zwei Antennen 23a und 23b werden im Innenraumbereich 24 MIMO-Signale ausgestrahlt. Das MIMO-fähige Endgerät 25 ist in der Lage, die MIMO-Signale zu empfangen.

Im Kommunikationsnetzwerk 100 gemäß Fig. 2 sind die Basisstation 16 und der Repeater 20 bezüglich der kognitiven Frequenzumsetzung miteinander abgestimmt. Auch der Repeater 10 umfasst optional als Mittel zur Unterdrückung einer Rückkopplung 116 einen adaptiven Filter 117, der im durchgeleiteten Signal Rückkopplungseffekte aus den abgestrahlten Signalen unterdrückt.

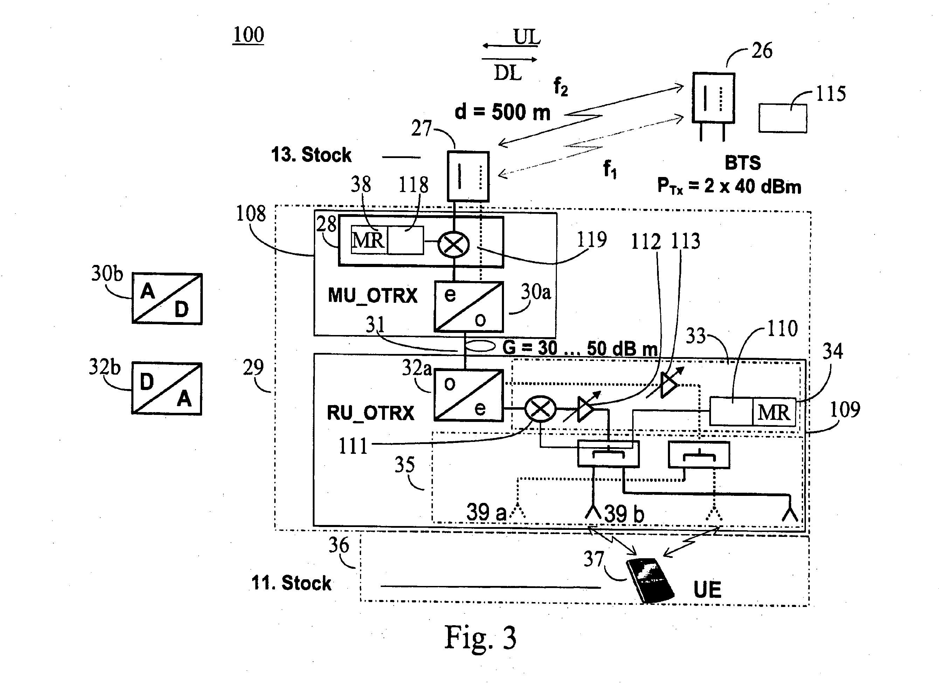

Entsprechend Fig. 3 kann zur Verteilung der Kommunikationssignale im Innenraumbereich ein Multiband-Übertragungssystem 29 in das Kommunikationsnetzwerk 100 integriert sein. Dieses Multiband-Übertragungssystem 29 umfasst eine Master-Einheit 108 und mindestens eine Remote-Einheit 109, die über eine oder mehrere Signalleitungen 31 miteinander in Verbindung stehen. Die Master-Einheit 108 empfängt hierbei Signale einer Basisstation 26, bündelt die multiplen Informationskanäle unter einzelner Frequenzumsetzung zur Vermeidung von Interferenzen und unter Hinzufügung weiterer Informationskanäle, wie z.B. aus einem digitalen Netzwerk oder weiterer Kommunikationssignale, auf die gemeinsame Signalleitung 31. In der oder jeder Remote-Einheit 109 werden die multiplen Informationskanäle getrennt, in der Frequenz zurückversetzt, verstärkt und über Antennen 39a, 39b ausgesendet. Über mehrere Remote-Einheiten 109 ist eine Verteilung der Kommunikationssignale z.B. über mehrere Stockwerke eines Gebäudes oder in mehrerer Fahrgastzellen möglich. In jedem Stockwerk kommuniziert das Endgerät 37 dann mit den Antennen 39a, 39b der jeweils zugeordneten Remote-Einheit 109.

Entsprechend Fig. 3 werden zwei oder mehrere frequenzversetzte Signale von einer Basisstation 26 ausgestrahlt. Dabei kann die Basisstation 26 als MIMO-fähige Basisstation 1 mit einem nachgeschalteten Repeater entsprechend Fig. 1 oder bereits als kognitive Basisstation 16 entsprechend Fig. 2 ausgebildet sein. Nach der Übertragung über die Luftschnittstelle im Außenbereich können die von der Basisstation 26 ausgesendeten Kommunikationssignale mit Hilfe der Antennenempfangseinheit 27 der Master-Einheit 108 empfangen werden. Die von der Antennenempfangseinheit empfangenen Kommunikationssignale sind insbesondere wenigstens zwei kognitiv auf verschiedene Frequenzen umgesetzte MIMO-Signale.

Ein Pick-up Repeater 28 der Master-Einheit 108 setzt die empfangenen multiplen Informationskanäle mittels eines Frequenzmischers 119 zunächst in Frequenzen um, wie sie für eine Übertragung in dem Multiband-Übertragungssystem 29 von Vorteil sind. Explizit dargestellt ist ein Multiband-Übertragungssystem 29, bei welchem die eingehenden Informationskanäle in der Master-Einheit 108 nach der Frequenzumsetzung vor ihrer Übertragung in der gemeinsamen Signalleitung 31 mithilfe eines elektro-optischen Wandlers 30a in ihre optische Manifestation umgesetzt werden. Der sehr geringe Querschnitt und die nahezu verlustlose Signalübertragung ermöglichen es, speziell in komplexen Gebäudestrukturen, die starke Funkfelddämpfung zu überwinden.

Zur Frequenzumsetzung umfasst der Pick-up Repeater 28 weiter eine Messempfangseinheit 38 sowie eine Umsetzeinrichtung 118, der der Frequenzmischer 119 zugeordnet ist. Die Messempfangseinheit 38 erhält beispielsweise über eine zentrale Datenbank 115 oder durch ein separates Funksignal Informationen über die vorliegend erfolgte kognitive Frequenzumsetzung der MIMO-Signale. Diese Information wird im Multiband-Übertragungssystem 29 insbesondere für die Weiterverteilung und Zuordnung der frequenzgemultiplexten Informationskanäle herangezogen. Ebenso wird die Messempfangseinheit 38 eingesetzt, um im Außenbereich Informationen über die verfügbaren bzw. ungenutzten Frequenzbereiche zu erhalten. Diese Informationen können der zentralen Datenbank 115 zur Verfügung gestellt werden, so dass in Uplink-Richtung eine kognitive Frequenzumsetzung insbesondere der räumlich multiplen MIMO-Signale in die festgestellten bzw. vorhandenen ungenutzten Frequenzbereiche vorgenommen werden kann.

Weiter werden in Downlink-Richtung nach der optischen Verteilung der frequenzgemultiplexten Informationskanäle diese mithilfe eines optischelektrischen Wandlers 32a in der Remote-Einheit 109 in den gewählten Funkwellenbereich zurückgewandelt.

Die Umsetzung der hinsichtlich der Frequenz kognitiv umgesetzten Informationskanäle erfolgt entsprechend Fig. 3 in der jeweiligen Remote-Einheit 109. Diese umfasst einen kognitiven Repeater 33, der eine Messempfangseinheit 34, eine Umsetzeinrichtung 110 sowie einen Frequenzmischer 111 enthält. Wie vorbeschrieben setzt die Umsetzeinrichtung 110 den kognitiv frequenzversetzten Informationskanal mittels des Frequenzmischers 111 auf eine geeignete Frequenz zurück, die insbesondere eine Frequenz aus dem Kommunikationsband der Basisstation 26 sein kann. Dazu kann die Messempfangseinheit 34 mittels des zugeordneten Modems des Repeaters 33 auf die zentrale Datenbank 115 zurückgreifen oder ist über einen Informationskanal mit der Messempfangseinheit 38 des Pick-up Repeaters 28 verbunden. Die von dem Repeater 33 empfangenen Informationskanäle werden vorliegend mittels Verstärker 112, 113 verstärkt und beispielsweise über ein passives Verteilnetzwerk mittels verschiedener Antennen 39a, 39b ausgestrahlt.

Entsprechend Fig. 3 sind die von der Basisstation 26 ausgesendeten Kommunikationskanäle MIMO-Signale. Mit anderen Worten enthalten die multiplen Informationskanäle Kodierungen zur Anwendung der MIMO-Technologie. Über die mindestens zwei zugeordneten Antennen 39a, 39b der Remote-Einheit 109 werden die räumlich multiplen Informationskanäle der MIMO-Signale getrennt ausgesendet.

Alternativ zu dem in Fig. 3 explizit dargestellten Multiband-Übertragungssystem 29 mit elektro-optischen Wandlern 30a, 32a kann die Übertragung auf der gemeinsamen Signalleitung 31 zwischen Master-Einheit 108 und Remote-Einheit 109 digital erfolgen. In diesem Fall weisen Master-Einheit 108 und Remote-Einheit 109 jeweils Analog-Digital-Wandlereinheiten 30b bzw. 32b auf.

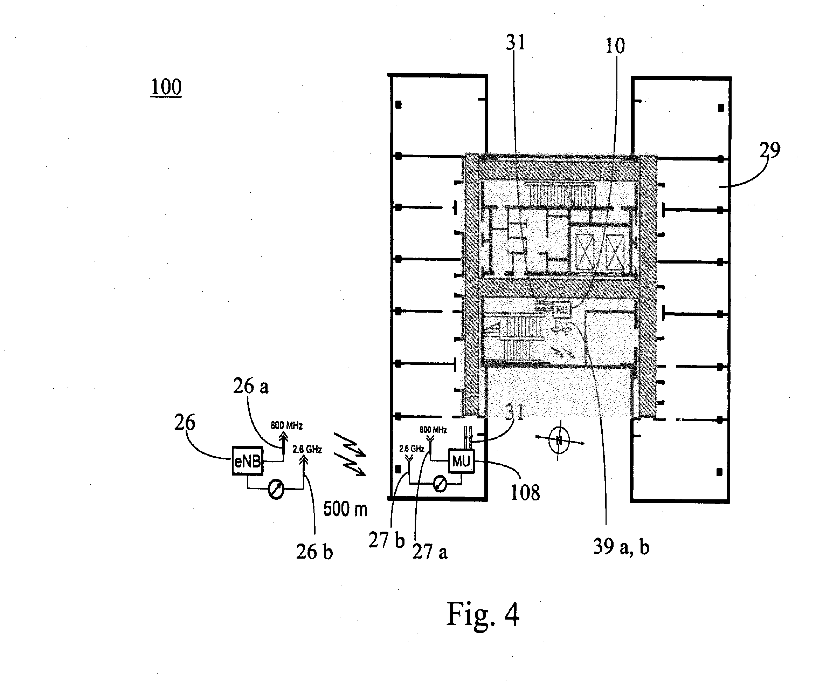

In Fig. 4 ist die Versorgungslage für mobile Kommunikation in einem Gebäude dargestellt, wobei die Anbindung an eine Basisstation im Außenbereich ähnlich Fig. 3 über ein Multiband-Übertragungssystem 29 erfolgt. Im Außenbereich ist eine kognitive Basisstation 26 vorgesehen, die beispielhaft innerhalb des LTE-Standards über die Antennen 26a und 26b in den 800 MHz und 2,6 GHz Frequenzbändern Kommunikationssignale auf multiplen Informationskanälen sendet und empfängt. Insbesondere ist die Basisstation 26 ausgebildet, in der Frequenz kognitiv versetzte ursprünglich gleichfrequente Informationskanäle, wie im Falle eines MIMO-Systems, über die beiden Antennen 26a, 26b auszusenden. Im Innenraumbereich werden die Informationskanäle in der Frequenz wieder zurückgesetzt oder erneut entsprechend versetzt und gleichfrequent über zwei Antennen 39 a,b ausgesendet und von einem Endgerät empfangen. Dabei kann im Außenbereich eine kognitive Frequenzumsetzung wenigstens eines der gleichfrequenten Signale (z.B. innerhalb des 2,6 GHz Frequenzbands) beispielsweise in die für terrestrisches Fernsehen vorgesehenen Frequenzkanäle innerhalb des 800 MHz Frequenzbandes hinein erfolgen. Die gleichfrequente Abstrahlung im Innenraumbereich kann dann wiederum im 2,6 GHz Frequenzband erfolgen. Auch kann im Außenbereich im Falle von gleichfrequenten Signalen innerhalb des 800 MHz Frequenzbandes eine kognitive Umsetzung wenigstens eines dieser Signale in einen ungenutzten Frequenzbereich innerhalb des 2,6 GHz Frequenzbandes, z.B. in den für Zeitduplexverfahren (TDD) vorgesehenen Bereich zwischen 2570 und 2620 kHz, erfolgen. Im Innenraumbereich kann dann eine Abstrahlung im 2,6 GHz Frequenzband vorgenommen werden. Wiederum in einer anderen Alternative kann wenigstens eines der gleichfrequenten Signale im Aussenbereich auf eine ungenutzte Frequenz innerhalb des Frequenzbandes zwischen 2,4 und 2,5 GHz umgesetzt werden, welches für In-Haus-Wireless LAN verwendet ist.

Über Antennen 27a und 27b empfängt die Master-Einheit 108 insbesondere die kognitiv frequenzversetzten Informationskanäle und setzt diese entsprechend Fig. 3 zur Übermittlung auf einer gemeinsamen Signalleitung 31 um. Über die gemeinsame Signalleitung 31 erfolgt die Verteilung innerhalb des gesamten Gebäudes. Auf jeder Etage befindet sich eine Remote-Einheit 109, die nach einer Zurückversetzung der kognitiv frequenzversetzten Informationskanäle diese über Antennen 39a und 39b aussendet. Entsprechend Fig. 3 erfolgt die Zurückversetzung der für die gemeinsame Signalleitung 31 frequenzversetzten Informationskanäle in den Funkwellenbereich hinein ebenfalls in jeder Remote-Einheit 109.

Vorliegend wurden im Außenbereich 2x2 MIMO-Signale vor deren Übertragung kognitiv frequenzumgesetzt. Es erfolgte im Innenraumbereich innerhalb des schraffierten Flurraumes eine Messung des Datendurchsatzes nach Frequenzrücksetzung mit einem 2x2 MIMO-fähigen Endgerät 35 entsprechend Fig. 2. Es zeigte sich, dass der Datendurchsatz gegenüber einem herkömmlichen Kommunikationsnetzwerk, bei dem eine MIMO-fähige Basisstation im Außenbereich gleichfrequente MIMO-Signale sendet, deutlich verbessert werden konnte. Durch eine Funkübertragung unter kognitiver Frequenzumsetzung sind die Beschränkungen hinsichtlich des Einsatzes der MIMO-Technologie im Außenbereich aufgehoben.

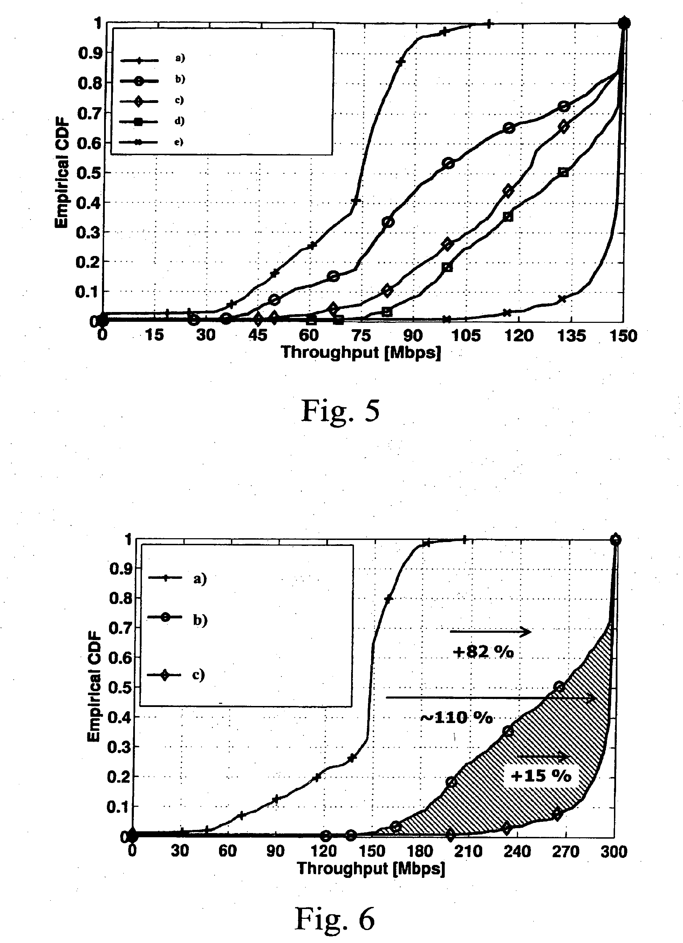

Figuren 5 und 6 zeigen ermittelte Verteilungsfunktionskurven (Empirical CDF) des Datendurchsatzes in Megabit pro Sekunde (Throughput [Mbps]) für verschiedene Antennen- und Systemkonfigurationen jeweils gemessen an einem LTE-Terminal entlang einer Messstrecke vergleichbar Fig. 4. Alle Messkurven wurden an einem realen Gebäude entsprechend Fig. 4 im 13. Stockwerk aufgenommen.

Die Abkürzung CDF steht für englisch: Cumulative Distribution Function, also für die sogenannte kummulative Verteilungsfunktion. Der Wert der Verteilungsfunktion für einen Parameter x gibt die Wahrscheinlichkeit an, mit der die betrachtete Variable einen Wert kleiner oder gleich x aufweist.

Für ein 2x2 LTE MIMO-System mit einer Kanalbandbreite von 20 MHz beträgt die optimale Datenrate 150 Mbps. Bei einer Verdoppelung der Antennen und einer optimalen Entkopplung aller Antennen steigt die Datenrate für ein 4x4 MIMO-System linear mit der Anzahl der Antennen und beträgt somit 300 Mbps.

Fig. 5 zeigt Messkurven a), b), c), d) und e) zur Erläuterung der Vorteile einer Frequenzumsetzung für ein 2x2 MIMO-System. Die ursprünglichen MIMO-Signale sind gleichfrequent mit einer Frequenz innerhalb des 800 MHz Frequenzbands. Von einem MIMO fähigen Endgerät werden die MIMO-Signale in einem Innen-raum eines Gebäudes empfangen.

Die Kurve a) zeigt die Durchsatzverteilung unter Verwendung von zwei nahe zueinander angeordneten, kopolarisierten Antennen der Basisstation. Die MIMO-Signale werden gleichfrequent direkt vom Außenbereich in den Innenraum eingestrahlt. Die gleiche Polarisation sowie der geringe Abstand der Sendeantennen führt zu einer sehr geringen Winkelspreizung und damit zu einer starken Korrelation zwischen den beiden Sendeströmen. Dadurch können die Datenströme nicht mehr durch ein MIMO Endgerät im Innenraum dekodiert werden. Somit halbiert sich die Datenrate am Endgerät und liegt entsprechend Fig. 5, Kurve a) in mehr als 50 % der Fälle unter 75 Mbps. Die hohen Datenraten von 150 Mbps sind bei dieser Konfiguration nicht erreichbar. In 90 % der Fälle bleiben die Datenraten unter 87 Mbps.

Die Kurve b) zeigt die Durchsatzverteilung unter der Verwendung von jeweils zwei kreuzpolarisierten Antennen der Basisstation und des Repeaters. Die MIMO-Signale werden gleichfrequent vom Außenbereich in den Innenraum eingestrahlt. Durch die Verwendung unterschiedlicher Polarisationsrichtungen an der Sendeantenne tritt weniger Interferenz zwischen beiden Sendeströmen, sogenannte Inter-Stream Interferenz, auf. Somit können die Empfangsströme am Endgerät mit größerer Wahrscheinlichkeit dekodiert werden. Allgemein steigt die durchschnittliche Datenrate und liegt in 50 % der Fälle bei 96 Mbps, in mehr als 46 % über 100 Mbps.

Die dritte Kurve c) wurde mit einem Messaufbau ähnlich Fig. 4 realisiert, wobei ein Sendestrom in einem 800 MHz Frequenzband im Innenraum des Gebäudes direkt empfangen wird. Ein zweiter Sendestrom in einem 2,6 GHz Frequenzband wird durch ein Multiband-Übertragungssystem entsprechend Fig. 3 empfangen, auf das 800 MHz Frequenzband umgesetzt und im Gebäude abgestrahlt. Ein MIMO Signal wird im 800 MHz Frequenzband gesendet. Das andere MIMO-Signal wird in das 2,6 GHz Frequenzband umgesetzt. Die unterschiedlichen Datenströme werden am LTE-Endgerät wieder zusammengesetzt. Durch die Verwendung unterschiedlicher Frequenzen an der Basisstation können beide Signalströme ohne Interstream-Interferenz in das Gebäude übertragen werden. Zusätzlich kann der von 2.6 GHz auf 800 MHz konvertierte Datenstrom im Multiband-Übertragungssystem verstärkt werden. Dadurch liegt die erzielbare Datenrate am Endgerät in mehr als 50 % der Fälle bei 121 Mbps. In mehr als 75 % der Fälle liegt die Datenrate über 100 Mbps.

Die vierte Kurve d) zeigt das gleich Messszenario wie Kurve c), allerdings mit der Verwendung anderer Empfangsantennen an der Eingangsseite des Multiband-Übertragungssystems. Die verwendete, sogenannte Pick-up Antenne hat eine zusätzliche Verstärkung von 20 dB. Dadurch liegt die erzielbare Datenrate am LTE-Endgerät in mehr als 50 % der Fälle bei 132 Mbps. In mehr als 82 % der Fälle liegt die Datenrate bei über 100 Mbps.

Die fünfte Kurve e) zeigt einen Messaufbau ähnlich zu Kurve c), wobei jedoch der Signalstrom im 800 MHz Frequenzband vom Multiband-Übertragungssystem mit empfangen und durchgeleitet sowie gegebenenfalls zusätzlich verstärkt wird. Die beiden Datenströme werden am LTE-Endgerät wieder zusammengesetzt. Durch die Verwendung unterschiedlicher Frequenzen an der Basisstation können beide Ströme ohne Interstream-Interferenz in das Gebäude übertragen werden. Zusätzlich werden beide Datenströme verstärkt. Dadurch liegt die erzielbare Datenrate am Endgerät in mehr als 50 % der Fälle bei 148 Mbps. In mehr als 99 % der Fälle liegt die Datenrate über 100 Mbps.

Es ist insgesamt zu erkennen, dass durch Verwendung der kognitiven Übertragungsverfahren der Datendurchsatz verdoppelt werden konnte.

Fig. 6 zeigt die aus Fig. 5 extrapolierten Messkurven für eine virtuelle 4x4 MIMO Konfiguration. Mit optimaler Entkopplung aller Datenströme skaliert die Datenrate linear mit der Anzahl der Sende- und Empfangsantennen und verdoppelt sich in dem Fall auf 300 Mbps. Im Folgenden werden die einzelnen Kurven a), b) und c) beschrieben. Unter Verwendung kreuzpolar angeordneter Antennen im Außenbereich wäre, selbst in schwach streuenden Umgebungen, eine doppelte Nutzung des Übertragungskanals auch ohne kognitive Verfahren denkbar. Eine ausreichende Polarisationsentkopplung ist auf zwei senkrecht zueinander angeordnete Antennen beschränkt. Diese Einschränkung kann mit Hilfe des angegebenen Kommunikationsnetzwerkes überwunden werden.

Die erste Messkurve a) zeigt die gemessenen Datenraten unter der Annahme, dass vier Sendeströme im 800 MHz Frequenzband direkt an einem Eingangsterminal mit vier Empfangsantennen oder an zwei Eingangsterminals mit jeweils zwei Empfangsantennen empfangen und ins Gebäude übertragen werden. Dabei werden zwei Dual-X-polarisierte Sendeantennen an der Basisstation verwendet. Dadurch, dass jeweils zweimal die gleiche Polarisationsrichtung an der Basisstation verwendet werden muss, kommt es zu Interstream-Interferenz, d.h. Korrelation zwischen jeweils zwei Sendeströmen. Dadurch degradiert der Gesamtdurchsatz im System und beträgt in 50 % der Fälle 150 Mbps. In 30 % der Fälle kann ein höherer Durchsatz als 150 Mbps erreicht werden, wobei die Datenrate in 98 % der Fälle unter 180 Mbps bleibt und keine Verdoppelung der Datenrate auf 300 Mbps an keinem Messpunkt im Szenario erreicht werden kann.

Beim Messszenario für die Kurven b) und c) sendet die Basisstation vier Sendeströme wie in dem vorherigen Szenario über eine Dual-X-Polarisierte Antennenkonfiguration, allerdings unter der Verwendung von zwei unterschiedlichen Frequenzbereichen, hier innerhalb eines 800 MHz und eines 2.6 GHz Frequenzbandes. Mit anderen Worten sind zwei der vier MIMO-Signale in ein anderes Frequenzband umgesetzt. Durch die Verwendung von unterschiedlichen Frequenzen sind die Sendeströme nun entkoppelt und es kommt nicht zur Interstream-Interferenz. Die Multiband-Übertragungseinheit empfängt alle vier Sendeströme, verstärkt diese und sendet sie nach Frequenzrückumsetzung im 800 MHz Frequenzband aus. Dadurch können die vollen 300 Mbps in das Gebäude gebracht werden.

Kurven b) und c) zeigen die Datenraten, die in diesem Fall an einem erzielt werden können. Gemäß Kurve b) kann somit in 50 % der Fälle eine Datenrate von mehr als 260 Mbps erreicht werden, in fast 30 % der Fälle kann sogar die Spitzendatenrate von 300 Mbps erreicht werden. Dadurch ergibt sich eine deutliche Steigerung im Vergleich zum ersten Szenario. Im Mittel beträgt der Durchsatzgewinn 82 %.

Bei Kurve c) wurde die Sendeleistung im Gebäude um 20 dB angehoben. In diesem Fall kann schon in mehr als 50 % der Fälle die Datenrate von 295 Mbps erreicht werden, was einem Durchsatzgewinn von 15 % zu Kurve 2 entspricht. Insgesamt ergibt sich so eine Steigerung von 110 % im Vergleich zur ersten Kurve.

### Bezugszeichenliste

- 1: Basisstation, MIMO-fähig
- 2 a,b,c,d: Antennen
- 3: Endgerät, MIMO-fähig
- 4 a,b,c,d: bidirektionale Koppler
- 5: Repeater, kognitiv, Basisstationsseitig
- 6: Messempfangseinheit
- 7: Multiplexer
- 8: Antenne
- 9: Antenne
- 10: Repeater, kognitiv, endgeräteseitig
- 11: Multiplexer
- 12: Messempfangseinheit
- 13 a,b: Antennen
- 14: Innenbereich
- 15: Endgerät, MIMO-fähig
- 16: Basisstation, kognitiv
- 17: Antenne
- 18: Endgerät, kognitiv
- 19: Antenne
- 20: Repeater, kognitiv, endgerätseitig
- 21: Multiplexer
- 22: Messempfangseinheit
- 23 a, b: Antennen
- 24: Innenbereich
- 25: Endgerät, MIMO-fähig
- 26: Basisstation, MIMO-fähig
- 26 a, b: Antennen der MIMO-fähigen Basisstation
- 27: Antennenempfangseinheit
- 27 a, b: Antennen der Antennenempfangseinheit
- 28: Pick-up Repeater
- 29: Multiband-Übertragungssystem
- 30a: elektro-optische Wandlereinheit
- 30b: analog-digitale Wandlereinheit
- 31: gemeinsame Signalleitung
- 32a: elektro-optische Wandlereinheit
- 32b: analog-digitale Wandlereinheit
- 33: Repeater, endgerätseitig, Umsetzer
- 34: Messempfangseinheit
- 35: Verteilsystem
- 36: Innenbereich
- 37: Endgerät, MIMO-fähig
- 38: Messempfangseinheit
- 39 a, b: Antennen
- 100: Kommunikationsnetzwerk
- 101: Umsetzeinrichtung
- 102: Frequenzmischer
- 103: Umsetzeinrichtung
- 104: Frequenzmischer
- 105: Multiplexer
- 106: Umsetzeinrichtung
- 107: Frequenzmischer
- 108: Master-Einheit
- 109: Remote-Einheit
- 110: Umsetzeinrichtung
- 111: Frequenzmischer
- 112: Verstärker
- 113: Verstärker
- 114: Umsetzeinrichtung, Basisstation
- 115: Datenbank
- 116: Mittel zur Unterdrückung einer Rückkopplung
- 117: adaptiver Filter
- 118: Umsetzeinrichtung
- 119: Frequenzmischer

## Patentansprüche

1. Kommunikationsnetzwerk (100) für drahtlose Kommunikation, umfassend eine Basisstation (1, 16, 26), ein drahtloses Endgerät (3, 15, 18, 25, 37) und wenigstens einen Repeater (5, 10, 20, 28, 33), der zwischen die Basisstation (1, 16, 26) und das drahtlose Endgerät (3, 15, 18, 25, 37) geschaltet ist, wobei die Basisstation (1, 16, 26) eingerichtet ist, ein Kommunikationssignal auf wenigstens zwei gleichfrequenten MIMO-kodierten Informationskanälen zu senden und zu empfangen, wobei das Endgerät (3, 15, 18, 25, 37) eingerichtet ist, ein Kommunikationssignal auf wenigstens zwei gleichfrequenten MIMO-kodierten Informationskanälen zu senden und zu empfangen, und wobei der Repeater (5, 10, 20, 28, 33) eingerichtet ist, Kommunikationssignale auf wenigstens zwei gleichfrequenten MIMOkodierten Informationskanälen zu empfangen, durchzuleiten und erneut auszusenden, und eine Umsetzeinrichtung (101, 103, 106, 110, 118) zur Frequenzumsetzung wenigstens eines durchgeleiteten Informationskanals enthält,
**dadurch gekennzeichnet,**
**dass** zusätzlich eine Messempfangseinheit (6, 12, 22, 34, 38) umfasst ist, die zur Ermittlung ungenutzter, außerhalb der dem Mobilfunk zugewiesenen Frequenzbänder liegender Frequenzbereiche zur drahtlosen Kommunikation eingerichtet ist, dass die Messempfangseinheit (6, 12, 22, 34, 38) mit der Umsetzeinrichtung (101, 103, 106, 110, 118) des Repeaters (5, 10, 20, 28, 33) verbunden ist, dass die Umsetzeinrichtung (101, 103, 106, 110, 118) eingerichtet ist, die Frequenzumsetzung in wenigstens einer Kommunikationsrichtung (UL, DL) auf eine Frequenz aus den ungenutzten, außerhalb der dem Mobilfunk zugewiesenen Frequenzbänder liegenden Frequenzbereichen vorzunehmen, so dass die MIMO-kodierten Informationskanäle dann multifrequent übertragen werden, und dass der Repeater (5, 10, 20, 28, 33) eingerichtet ist, das Kommunikationssignal mit dem wenigstens einen frequenzumgesetzten Informationskanal in der wenigstens einen Kommunikationsrichtung drahtlos zu senden, wodurch der wenigstens eine frequenzumgesetzte MIMO-kodierte Informationskanal auf einer anderen Frequenz außerhalb der dem Mobilfunk zugewiesenen Frequenzbänder transportiert wird.

2. Kommunikationsnetzwerk (100) nach Anspruch 1,
**dadurch gekennzeichnet,**
**dass** die Basisstation (1, 16, 26) eine weitere Umsetzeinrichtung (114) zur Frequenzumsetzung wenigstens eines Informationskanals umfasst, die mit der Messempfangseinheit (6, 12, 22, 34) verbunden und eingerichtet ist, die Frequenzumsetzung in Downlink-Richtung auf eine Frequenz aus den ungenutzten, außerhalb der dem Mobilfunk zugewiesenen Frequenzbänder liegenden Frequenzbereichen vorzunehmen, und dass die Umsetzeinrichtung (101, 103, 106, 110, 118) des wenigstens einen Repeaters (5, 10, 20, 28, 33) eingerichtet ist, in Downlink-Richtung (DL) die Frequenz des frequenzumgesetzten Informationskanals zurückzusetzen, und in Uplink-Richtung (UL) die Frequenzumsetzung des wenigstens einen Informationskanals in die Frequenz aus den ungenutzten, außerhalb der dem Mobilfunk zugewiesenen Frequenzbänder liegenden Frequenzbereichen vorzunehmen.

3. Kommunikationsnetzwerk (100) nach Anspruch 1 oder 2,
**dadurch gekennzeichnet, dass** zwischen Basisstation (1, 16, 26) und Endgerät (3, 15, 18, 25, 37) wenigstens zwei Repeater (5, 10, 20, 28, 33) umfasst sind, die eingerichtet sind, Kommunikationssignale auf multiplen Informationskanälen zu empfangen, durchzuleiten und erneut auszugeben, und die jeweils eine mit der Messempfangseinheit (6, 12, 22, 34, 38) verbundene Umsetzeinrichtung (101, 103, 106, 110, 118) zur Frequenzumsetzung wenigstens eines durchgeleiteten Informationskanals in wenigstens einer Kommunikationsrichtung auf eine Frequenz aus den ungenutzten, außerhalb der dem Mobilfunk zugewiesenen Frequenzbänder liegenden Frequenzbereichen enthalten, wobei die Umsetzeinrichtung (101) des basisstationsseitigen Repeaters (5) eingerichtet ist, in Downlink-Richtung (DL) die Frequenzumsetzung des wenigstens einen Informationskanals auf die Frequenz aus den ungenutzten, außerhalb der dem Mobilfunk zugewiesenen Frequenzbänder liegenden Frequenzbereichen vorzunehmen und in Uplink-Richtung (UL) die Frequenz des frequenzumgesetzten Informationskanals zurückzusetzen, und wobei die Umsetzeinrichtung (103, 106, 110, 118) des endgerätseitigen Repeaters (10, 20, 33) eingerichtet ist, in Downlink-Richtung (DL) die Frequenz des frequenzumgesetzten Informationskanals zurückzusetzen, und in Uplink-Richtung (UL) die Frequenzumsetzung des wenigstens einen Informationskanals auf die Frequenz aus den ungenutzten, außerhalb der dem Mobilfunk zugewiesenen Frequenzbänder liegenden Frequenzbereichen vorzunehmen.

4. Kommunikationsnetzwerk (100) nach Anspruch 3,
**dadurch gekennzeichnet, dass** die Basisstation (1, 16, 26) eine MIMO-fähige Basisstation (1, 16, 26) ist, und eingerichtet ist, ein Kommunikationssignal auf räumlich multiplen Informationskanälen zu senden und zu empfangen, und dass der basisstationsseitige Repeater (5) ein MIMO-fähiger Repeater (5) ist, der eingerichtet ist, in Uplink-Richtung (UL) räumlich multiple Informationskanäle zu senden und in Downlink-Richtung (DL) räumlich multiple Informationskanäle zu empfangen.

5. Kommunikationsnetzwerk (100) nach Anspruch 3 oder 4,
**dadurch gekennzeichnet, dass** der basisstationsseitige Repeater (5) über bidirektionale Koppler (4 a,b,c,d) an die Basisstation (1, 16, 26) angeschlossen ist, und die Kommunikationssignale mit der Basisstation (1, 16, 26) optisch oder elektrisch austauscht.

6. Kommunikationsnetzwerk (100) nach einem der vorhergehenden Ansprüche,
**dadurch gekennzeichnet,**
**dass** das Endgerät (3, 15, 18, 25, 37) ein MIMO-fähiges Endgerät (3, 15, 18, 25, 37) ist, welches eingerichtet ist, ein Kommunikationssignal auf räumlich multiplen Informationskanälen zu senden und zu empfangen, und dass der wenigstens eine oder endgerätseitige Repeater (10, 20, 33) ein MIMO-fähiger Repeater (10, 20, 33) ist, der eingerichtet ist, in Downlink-Richtung (DL) räumlich multiple Informationskanäle zu senden und in Uplink-Richtung (UL) räumlich multiple Informationskanäle zu empfangen.

7. Kommunikationsnetzwerk (100) nach einem der vorhergehenden Ansprüche,
**dadurch gekennzeichnet, dass** der oder jeder Umsetzeinrichtung (101, 103, 106, 110, 118) eine Messempfangseinheit (6, 12, 22, 34, 38) zugeordnet ist, wobei die Messempfangseinheiten (6, 12, 22, 34, 38) hinsichtlich der für die Frequenzumsetzung zu wählenden Frequenz miteinander verbunden und synchronisiert sind.

8. Kommunikationsnetzwerk (100) nach einem der vorhergehenden Ansprüche,
**dadurch gekennzeichnet, dass** die oder jede Messempfangseinheit (6, 12, 22, 34, 38) mit einer zentralen Datenbank (115) verbunden ist, in welcher die zur drahtlosen Kommunikation ungenutzten, außerhalb der dem Mobilfunk zugewiesenen Frequenzbänder liegenden Frequenzbereiche hinterlegt sind.

9. Kommunikationsnetzwerk (100) nach einem der vorhergehenden Ansprüche,
**dadurch gekennzeichnet, dass** die oder jede Messempfangseinheit (6, 12, 22, 34, 38) einen Spektrumsanalysator umfasst.

10. Kommunikationsnetzwerk (100) nach einem der vorhergehenden Ansprüche,
**dadurch gekennzeichnet, dass** die oder jede Umsetzeinrichtung (101, 103, 106, 110, 118) eingerichtet ist, für wenigstens einen der Informationskanäle keine Frequenzumsetzung vorzunehmen.

11. Kommunikationsnetzwerk (100) nach einem der vorhergehenden Ansprüche,
**dadurch gekennzeichnet, dass** der wenigstens eine oder endgerätseitige Repeater (10, 20, 28, 33) zur Versorgung eines Drahtlos-Netzwerks in einem Innenraum (14, 24, 36) eingesetzt ist.

12. Kommunikationsnetzwerk (100) nach einem der vorhergehenden Ansprüche,
**dadurch gekennzeichnet, dass** der oder jeder Repeater (5, 10, 20, 33, 38) elektronische Mittel (116) zur Unterdrückung einer Rückkopplung des ausgesendeten auf das durchgeleitete Kommunikationssignal umfasst.

13. Kommunikationsnetzwerk (100) nach Anspruch 12,
**dadurch gekennzeichnet, dass** die Mittel (116) zur Unterdrückung einer Rückkopplung einen digitalen adaptiven Filter (117) umfassen.

14. Kommunikationsnetzwerk (100) nach einem der vorhergehenden Ansprüche,
**dadurch gekennzeichnet, dass** ein Multiband-Übertragungssystem (29) mit einer Master-Einheit (108) und wenigstens einer mit der Master-Einheit (108) über eine gemeinsame Signalleitung (31) verbundenen Remote-Einheit (109) umfasst ist, wobei die Master-Einheit (108) zum Senden und zum Empfangen von Kommunikationssignalen auf multiplen Informationskanälen und zur Aufschaltung und Auskopplung der multiplen Informationskanäle auf ein Übertragungssignal ausgebildet ist, wobei das Übertragungssignal über die gemeinsame Signalleitung (31) geführt ist, und wobei der wenigstens eine oder endgerätseitige Repeater (10, 20, 33) als Bestandteil der Remote-Einheit (109) ausgebildet ist.

15. Kommunikationsnetzwerk (100) nach Anspruch 14,
**dadurch gekennzeichnet, dass** die Master-Einheit (108) und die Remote-Einheit (109) jeweils eine optisch-elektrische Wandlereinheit (30a, 32a) umfassen, die das Übertragungssignal zwischen einer elektrischen und einer optischen Manifestation wandelt, wobei das Übertragungssignal auf der gemeinsamen Signalleitung (31) optisch übertragen wird.

16. Kommunikationsnetzwerk (100) nach Anspruch 14,
**dadurch gekennzeichnet, dass** die Master-Einheit (108) und die Remote-Einheit (109) jeweils eine analoge-digitale Wandlereinheit (30b, 32b) umfassen, die das Übertragungssignal zwischen einer analogen und einer digitalen Manifestation wandelt, wobei das Übertragungssignal auf der gemeinsamen Signalleitung (31) digital übertragen wird.

## Claims

1. Communications network (100) for wireless communication, comprising a base station (1, 16, 26), a wireless terminal (3, 15, 18, 25, 37) and at least one repeater (5, 10, 20, 28, 33) which is connected between the base station (1, 16, 26) and the wireless terminal (3, 15, 18, 25, 37), the base station (1, 16, 26) being set up to transmit and receive a communication signal on at least two MIMO-coded information channels at the same frequency, the terminal (3, 15, 18, 25, 37) being set up to transmit and receive a communication signal on at least two MIMO-coded information channels at the same frequency, and the repeater (5, 10, 20, 28, 33) being set up to receive, transfer and retransmit communication signals on at least two MIMO-coded information channels at the same frequency, and contains a converting device (101, 103, 106, 110, 118) for converting the frequency of at least one transferred information channel,
**characterized in that**
a measurement receiving unit (6, 12, 22, 34, 38) is additionally included and is set up to determine unused frequency ranges for wireless communication which are outside the frequency bands allocated to mobile radio, **in that** the measurement receiving unit (6, 12, 22, 34, 38) is connected to the converting device (101, 103, 106, 110, 118) of the repeater (5, 10, 20, 28, 33), **in that** the converting device (101, 103, 106, 110, 118) is set up to convert the frequency in at least one communication direction (UL, DL) to a frequency from the unused frequency ranges which are outside the frequency bands allocated to mobile radio, with the result that the MIMO-coded information channels are then transmitted at multiple frequencies, and **in that** the repeater (5, 10, 20, 28, 33) is set up to wirelessly transmit the communication signal with the at least one frequency-converted information channel in the at least one communication direction, as a result of which the at least one frequency-converted MIMO-coded information channel is transported at another frequency outside the frequency bands allocated to mobile radio.

2. Communications network (100) according to Claim 1,
**characterized in that**
the base station (1, 16, 26) comprises a further converting device (114) for converting the frequency of at least one information channel, which converting device (114) is connected to the measurement receiving unit (6, 12, 22, 34) and is set up to convert the frequency in the downlink direction to a frequency from the unused frequency ranges which are outside the frequency bands allocated to mobile radio, and **in that** the converting device (101, 103, 106, 110, 118) of the at least one repeater (5, 10, 20, 28, 33) is set up to reset the frequency of the frequency-converted information channel in the downlink direction (DL) and to convert the frequency of the at least one information channel into the frequency from the unused frequency ranges which are outside the frequency bands allocated to mobile radio in the uplink direction (UL).

3. Communications network (100) according to Claim 1 or 2,
**characterized in that** at least two repeaters (5, 10, 20, 28, 33) are included between the base station (1, 16, 26) and the terminal (3, 15, 18, 25, 37) and are set up to receive, transfer and output again communication signals on multiple information channels and each contain a converting device (101, 103, 106, 110, 118), connected to the measurement receiving unit (6, 12, 22, 34, 38), for converting the frequency of at least one transferred information channel in at least one communication direction to a frequency from the unused frequency ranges which are outside the frequency bands allocated to mobile radio, the converting device (101) of the repeater (5) on the base station side being set up to convert the frequency of the at least one information channel to the frequency from the unused frequency ranges which are outside the frequency bands allocated to mobile radio in the downlink direction (DL) and to reset the frequency of the frequency-converted information channel in the uplink direction (UL), and the converting device (103, 106, 110, 118) of the repeater (10, 20, 33) on the terminal side being set up to reset the frequency of the frequency-converted information channel in the downlink direction (DL) and to convert the frequency of the at least one information channel to the frequency from the unused frequency ranges which are outside the frequency bands allocated to mobile radio in the uplink direction (UL).

4. Communications network (100) according to Claim 3,
**characterized in that** the base station (1, 16, 26) is a MIMO-capable base station (1, 16, 26) and is set up to transmit and receive a communication signal on spatially multiple information channels, and **in that** the repeater (5) on the base station side is a MIMO-capable repeater (5) which is set up to transmit spatially multiple information channels in the uplink direction (UL) and to receive spatially multiple information channels in the downlink direction (DL).

5. Communications network (100) according to Claim 3 or 4,
**characterized in that** the repeater (5) on the base station side is connected to the base station (1, 16, 26) via bidirectional couplers (4a, b, c, d) and interchanges the communication signals optically or electrically with the base station (1, 16, 26).

6. Communications network (100) according to one of the preceding claims,
**characterized in that**
the terminal (3, 15, 18, 25, 37) is a MIMO-capable terminal (3, 15, 18, 25, 37) which is set up to transmit and receive a communication signal on spatially multiple information channels, and **in that** the at least one or terminal-side repeater (10, 20, 33) is a MIMO-capable repeater (10, 20, 33) which is set up to transmit spatially multiple information channels in the downlink direction (DL) and to receive spatially multiple information channels in the uplink direction (UL).

7. Communications network (100) according to one of the preceding claims,
**characterized in that** a measurement receiving unit (6, 12, 22, 34, 38) is assigned to the or each converting device (101, 103, 106, 110, 118), the measurement receiving units (6, 12, 22, 34, 38) being connected to one another and synchronized with regard to the frequency to be selected for the frequency conversion.

8. Communications network (100) according to one of the preceding claims,
**characterized in that** the or each measurement receiving unit (6, 12, 22, 34, 38) is connected to a central database (115) which stores the frequency ranges which are unused for wireless communication and are outside the frequency bands allocated to mobile radio.

9. Communications network (100) according to one of the preceding claims,
**characterized in that** the or each measurement receiving unit (6, 12, 22, 34, 38) comprises a spectrum analyser.

10. Communications network (100) according to one of the preceding claims,
**characterized in that** the or each converting device (101, 103, 106, 110, 118) is set up not to convert the frequency for at least one of the information channels.

11. Communications network (100) according to one of the preceding claims,
**characterized in that** the at least one or terminal-side repeater (10, 20, 28, 33) is used to supply a wireless network in an internal space (14, 24, 36).

12. Communications network (100) according to one of the preceding claims,
**characterized in that** the or each repeater (5, 10, 20, 33, 38) comprises electronic means (116) for suppressing feedback of the transmitted communication signal to the transferred communication signal.

13. Communications network (100) according to Claim 12,
**characterized in that** the means (116) for suppressing feedback comprise a digital adaptive filter (117).

14. Communications network (100) according to one of the preceding claims,
**characterized in that** a multiband transmission system (29) with a master unit (108) and at least one remote unit (109) connected to the master unit (108) via a common signal line (31) is included, the master unit (108) being designed to transmit and receive communication signals on multiple information channels and to connect and decouple the multiple information channels to/from a transmission signal, the transmission signal being conducted via the common signal line (31), and the at least one or terminal-side repeater (10, 20, 33) being designed as a component of the remote unit (109).

15. Communications network (100) according to Claim 14,
**characterized in that** the master unit (108) and the remote unit (109) each comprise an optoelectrical transducer unit (30a, 32a) which converts the transmission signal between an electrical and an optical manifestation, the transmission signal being optically transmitted on the common signal line (31).

16. Communications network (100) according to Claim 14,
**characterized in that** the master unit (108) and the remote unit (109) each comprise an analogue/digital transducer unit (30b, 32b) which converts the transmission signal between an analogue and a digital manifestation, the transmission signal being digitally transmitted on the common signal line (31).

## Revendications

1. Réseau de communication (100) destiné aux communications sans fil, comprenant une station de base (1, 16, 26), un terminal sans fil (3, 15, 18, 25, 37) et au moins un répéteur (5, 10, 20, 28, 33) qui est connecté entre la station de base (1, 16, 26) et le terminal sans fil (3, 15, 18, 25, 37), dans lequel la station de base (1, 16, 26) est conçue pour émettre et recevoir un signal de communication sur au moins deux canaux d'informations de même fréquence codés par codage MIMO, dans lequel le terminal (3, 15, 18, 25, 37) est conçu pour émettre et recevoir un signal de communication sur au moins deux canaux d'informations de même fréquence codés par codage MIMO et dans lequel le répéteur (5, 10, 20, 28, 33) est conçu pour recevoir, acheminer et réémettre des signaux de communication sur au moins deux canaux d'informations de même fréquence codés par codage MIMO, et comporte un dispositif de conversion (101, 103, 106, 110, 118) destiné à convertir en fréquence au moins un canal d'informations acheminé,
**caractérisé en ce qu'**il est en outre prévu à des fins de communication sans fil une unité de réception de mesure (6, 12, 22, 34, 38) qui est conçue pour déterminer des domaines de fréquence inutilisés se situant à l'extérieur des bandes de fréquences allouées aux communications mobiles, **en ce que** l'unité de réception de mesure (6, 12, 22, 34, 38) est connectée au dispositif de conversion (101, 103, 106, 110, 118) du répéteur (5, 10, 20, 28, 33), **en ce que** le dispositif de conversion (101, 103, 106, 110, 118) est conçu pour effectuer la conversion de fréquence dans au moins une direction de communication (UL, DL) à une fréquence appartenant aux domaines de fréquence inutilisés se situant à l'extérieur des bandes de fréquences allouées aux communications mobiles de manière à ce que les canaux d'informations codés par codage MIMO puissent alors être transmis sur des fréquences multiples, et **en ce que** le répéteur (5, 10, 20, 28, 33) est conçu pour émettre sans fil le signal de communication à l'aide de l'au moins un canal d'informations converti en fréquence dans l'au moins une direction de communication, d'où il résulte que l'au moins un canal d'informations codé par codage MIMO converti en fréquence est transporté sur une autre fréquence extérieure aux bandes de fréquence allouées aux communications mobiles.

2. Réseau de communication (100) selon la revendication 1,
**caractérisé en ce que** la station de base (1, 16, 26) comprend un autre dispositif de conversion (114) destiné à convertir au moins un canal d'informations, qui est connecté à l'unité de réception de mesure (6, 12, 22, 34) et est conçu pour effectuer la conversion de fréquence dans la direction de liaison descendante à une fréquence appartenant aux domaines de fréquence inutilisés se situant à l'extérieur des bandes de fréquence allouées aux communications mobiles et **en ce que** le dispositif de conversion (101, 103, 106, 110, 118) de l'au moins un répéteur (5, 10, 20, 28, 33) est conçu pour réinitialiser la fréquence du canal d'informations converti en fréquence dans la direction de liaison descendante (DL) et pour effectuer la conversion de fréquence dans la direction de liaison montante (UL) de l'au moins un canal d'informations à la fréquence appartenant aux domaines de fréquence inutilisés se situant à l'extérieur des bandes de fréquence allouées aux communications mobiles.

3. Réseau de communication (100) selon la revendication 1 ou 2,
**caractérisé en ce que**, entre la station de base (1, 16, 26) et le terminal (3, 15, 18, 25, 37), il est prévu au moins deux répéteurs (5, 10, 20, 28, 33) qui sont conçus pour recevoir, acheminer et de nouveau délivrer des signaux de communication sur de multiples canaux d'informations et comportant respectivement un dispositif de conversion (101, 103, 106, 110, 118) connecté à l'unité de réception de mesure (6, 12, 22, 34, 38) pour convertir en fréquence au moins un canal d'informations acheminé dans au moins une direction de communication à une fréquence appartenant aux domaines de fréquences inutilisés se situant à l'extérieur des bandes de fréquences allouées aux communications mobiles, dans lequel le dispositif de conversion (101) du répéteur côté station de base (5) est conçu pour effectuer la conversion de fréquence dans la direction de liaison descendante (DL) de l'au moins un canal d'informations à la fréquence appartenant aux domaines de fréquence inutilisés se situant à l'extérieur des bandes de fréquence allouées aux communications mobiles et pour réinitialiser la fréquence du canal d'informations converti en fréquence dans la direction de liaison montante (UL), et dans lequel le dispositif de conversion (103, 106, 110, 118) du répéteur côté terminal (10, 20, 33) est conçu pour réinitialiser la fréquence du canal d'informations converti en fréquence dans la direction de liaison descendante (DL) et pour effectuer la conversion de fréquence de l'au moins un canal d'informations dans la direction de liaison montante (UL) à la fréquence appartenant aux domaines de fréquence inutilisés se situant à l'extérieur des bandes de fréquence allouées aux communications mobiles.

4. Réseau de communication (100) selon la revendication 3,
**caractérisé en ce que** la station de base (1, 16, 26) est une station de base à fonctionnalité MIMO (1, 16, 26) et est conçue pour émettre et recevoir un signal de communication sur de multiples canaux d'informations spatiaux et **en ce que** le répéteur côté station de base (5) est un répéteur à fonctionnalité MIMO (5) qui est conçu pour émettre de multiples canaux d'informations spatiaux dans la direction de liaison montante (UL) et pour recevoir de multiples canaux d'informations spatiaux dans la direction de liaison descendante (DL).

5. Réseau de communication (100) selon la revendication 3 ou 4,
**caractérisé en ce que** le répéteur côté station de base (5) est relié à la station de base (1, 16, 26) par l'intermédiaire d'un coupleur bidirectionnel (4a,b,c,d) et **en ce que** les signaux de communication sont échangés optiquement ou électriquement avec la station de base (1, 16, 26).

6. Réseau de communication (100) selon l'une quelconque des revendications précédentes,
**caractérisé en ce que** le terminal (3, 15, 18, 25, 37) est un terminal à fonctionnalité MIMO (3, 15, 18, 25, 37) qui est conçu pour émettre et recevoir un signal de communication sur de multiples canaux d'informations spatiaux et **en ce que** l'au moins un répéteur ou le répéteur côté terminal (10, 20, 33) est un répéteur à fonctionnalité MIMO (10, 20, 33) qui est conçu pour émettre de multiples canaux d'informations spatiaux dans la direction de liaison descendante (DL) et pour recevoir de multiples canaux d'informations spatiaux dans la direction de liaison montante (UL).

7. Réseau de communication (100) selon l'une quelconque des revendications précédentes,
**caractérisé en ce qu'**une unité de réception de mesure (6, 12, 22, 34, 38) est associée au ou à chaque dispositif de conversion (101, 103, 106, 110, 118), dans lequel les unités de réception de mesure (6, 12, 22, 34, 38) sont interconnectées et synchronisées les unes avec les autres en ce qui concerne la fréquence devant être sélectionnée pour la conversion de fréquence.

8. Réseau de communication (100) selon l'une quelconque des revendications précédentes,
**caractérisé en ce que** l'unité de réception de mesure ou chaque unité de réception de mesure (6, 12, 22, 34, 38) est connectée à une banque de données centrale (115) dans laquelle sont stockés les domaines de fréquence inutilisés pour les communications sans fil et se situant à l'extérieur des bandes de fréquence allouées aux communications mobiles.

9. Réseau de communication (100) selon l'une quelconque des revendications précédentes,
**caractérisé en ce que** l'unité de réception de mesure ou chaque unité de réception de mesure (6, 12, 22, 34, 38) comprend un analyseur de spectre.

10. Réseau de communication (100) selon l'une quelconque des revendications précédentes,
**caractérisé en ce que** le ou chaque dispositif de conversion (101, 103, 106, 110, 118) est conçu pour n'effectuer aucune conversion de fréquence pour au moins l'un des canaux d'informations.

11. Réseau de communication (100) selon l'une quelconque des revendications précédentes,
**caractérisé en ce que** l'au moins un répéteur côté terminal (10, 20, 28, 33) est mis en oeuvre pour fournir un réseau sans fil dans un espace intérieur (14, 24, 36).

12. Réseau de communication (100) selon l'une quelconque des revendications précédentes,
**caractérisé en ce que** le ou chaque répéteur (5, 10, 20, 33, 38) comprend des moyens électroniques (116) destinés à supprimer un rétrocouplage du signal de communication émis et acheminé sur celui-ci.

13. Réseau de communication (100) selon la revendication 12,
**caractérisé en ce que** les moyens (116) destinés à supprimer un rétrocouplage comprennent un filtre adaptatif numérique (117).

14. Réseau de communication (100) selon l'une quelconque des revendications précédentes,
**caractérisé en ce qu'**il est prévu un système de transmission multibande (29) comportant une unité maîtresse (108) et au moins une unité distante (109) connectée à l'unité maîtresse (108) par l'intermédiaire d'une ligne de signal commune (31), dans lequel l'unité maîtresse (108) est conçue pour émettre et recevoir des signaux de communication sur de multiples canaux d'informations et pour appliquer et coupler en sortie les multiples canaux d'informations sur un signal de transmission, dans lequel le signal de transmission est acheminé par l'intermédiaire de la ligne de signal commune (31) et dans lequel l'au moins un répéteur ou répéteur côté terminal (10, 20, 33) est réalisé sous la forme d'un composant de l'unité distante (109).

15. Réseau de communication (100) selon la revendication 14,
**caractérisé en ce que** l'unité maîtresse (108) et l'unité distante (109) comprennent respectivement une unité de conversion optique-électrique (30a, 32a) qui convertit le signal de transmission entre une forme électrique et une forme optique, dans laquelle le signal de transmission est transmis optiquement sur la ligne de signal commune (31).

16. Réseau de communication (100) selon la revendication 14,
**caractérisé en ce que** l'unité maîtresse (108) et l'unité distante (109) comprennent respectivement une unité de conversion analogique-numérique (30b, 32b) qui convertit le signal de transmission entre une forme analogique et une forme numérique, dans laquelle le signal de transmission est transmis numériquement sur la ligne de signal commune (31).
